# EUROPEAN PATENT APPLICATION

(11) **EP 4 693 630 A1**
(43) Date of publication of application: **11.02.2026**
(21) Application number: 24780919.7
(22) Date of filing: 29.03.2024
(51) Int. Cl.: H01M 50/105, H01G 2/10, H01G 9/08, H01G 11/78, H01G 13/00, H01M 10/04, H01M 50/15, H01M 50/169, H01M 50/184, H01M 50/186

(54) **ELECTRIC POWER STORAGE DEVICE, FIXING JIG, AND METHOD FOR MANUFACTURING ELECTRIC POWER STORAGE DEVICE**

(30) Priority: 29.03.2023 JP 2023054402; 28.06.2023 JP 2023106531
(71) Applicant: Dai Nippon Printing Co., Ltd., Tokyo 162-8001 (JP)
(72) Inventor: KANAZAWA, Sayako, Tokyo 162-8001 (JP); MIYASHIRO, Kae, Tokyo 162-8001 (JP); URIU, Toshibumi, Tokyo 162-8001 (JP); SASAKI, Miho, Tokyo 162-8001 (JP)
(74) Representative: Müller-Boré & Partner Patentanwälte PartG mbB
(86) International application number: PCT/JP2024/013346
(87) International publication number: WO 2024/204826

(57) **Abstract**

This electric power storage device comprises an electrode body and an exterior body that seals the electrode body. The outer package comprises: an outer package film that wraps the electrode body; a body portion in which at least the electrode body is wrapped by the outer package film; a protruding portion in which the outer package film protrudes outward from the body portion; a first seal portion in which surfaces facing each other of the exterior films of the protruding part are sealed, and a fixing jig for suppressing movement of the protruding portion with respect to the body portion.

## Description

### Technical Field

The present invention relates to an electrical storage device, a fixing jig, and a method for manufacturing an electrical storage device.

### Background Art

PTL 1 discloses an all-solid-state battery as an example of an electrical storage device. The all-solid-state battery includes an electrode assembly, and an outer packaging that seals the electrode assembly. The outer packaging includes an outer package film wound around the electrode assembly so as to have an opening part, and a lid disposed at the opening part. The outer package film includes a body portion that wraps the electrode assembly and the lid, and a bulging portion bulging outward from the body portion.

### Citation List

### Patent Literature

PTL 1: Japanese Patent Laid-open Publication No. 2019-153504

### Summary of Invention

### Technical Problem

In the electrical storage device, the bulging portion is movable with respect to the body portion, and material fatigue is likely to occur particularly in a portion of the bulging portion including a root. For this reason, a portion constituting the bulging portion of the outer package film may break, and sealing performance of the electrical storage device may be degraded.

An object of the present invention is to provide an electrical storage device in which an electrode assembly can be suitably sealed with an outer packaging, a fixing jig used in the electrical storage device or an intermediate body, and a method for manufacturing the electrical storage device.

### Solution to Problem

An electrical storage device according to a first aspect of the present invention includes: an electrode assembly; and an outer packaging that seals the electrode assembly, in which the outer packaging includes an outer package film that wraps the electrode assembly, a body portion in which at least the electrode assembly is wrapped by the outer package film, a bulging portion at which the outer package film bulges outward from the body portion, a first seal portion, at which mutually facing surfaces of the outer package film are sealed, in the bulging portion, and a fixing jig that suppresses movement of the bulging portion with respect to the body portion.

An electrical storage device according to a second aspect of the present invention is the electrical storage device according to the first aspect, in which the fixing jig includes a first fixing portion that is disposed to straddle the body portion and the bulging portion.

An electrical storage device according to a third aspect of the present invention is the electrical storage device according to the first aspect or the second aspect, in which the fixing jig includes a second fixing portion that supports the bulging portion.

An electrical storage device according to a fourth aspect of the present invention is the electrical storage device according to the first aspect, in which the fixing jig includes a first fixing portion that is disposed to straddle the body portion and the bulging portion, a second fixing portion that supports the bulging portion, and a connecting portion that connects the first fixing portion and the second fixing portion.

In an electrical storage device according to a fifth aspect of the present invention, the outer packaging further includes a lid that seals the electrode assembly along with the outer package film, in the electrical storage device according to any one of the first to fourth aspects.

An electrical storage device according to a sixth aspect of the present invention is the electrical storage device according to the fifth aspect, in which the lid includes a projecting portion or a recessed portion, and the fixing jig is coupled to the projecting portion or the recessed portion.

An electrical storage device according to a seventh aspect of the present invention is the electrical storage device according to any one of the first to sixth aspects, in which the bulging portion is folded at a position away from a root of the first seal portion as a start point, a gap is formed between the bulging portion and the body portion, and the fixing jig is disposed in at least a part of the gap.

A fixing jig according to an eighth aspect of the present invention is a fixing jig that is attached to at least one of an electrical storage device and an intermediate body of the electrical storage device. The electrical storage device or the intermediate body includes an electrode assembly, an outer package film that wraps the electrode assembly, a body portion in which at least the electrode assembly is wrapped by the outer package film, and a bulging portion at which the outer package film bulges outward from the body portion, and the fixing jig is configured to suppress movement of the bulging portion with respect to the body portion.

A method for manufacturing an electrical storage device according to a ninth aspect of the present invention is a method for manufacturing an electrical storage device including an electrode assembly and an outer packaging that seals the electrode assembly. The outer packaging includes an outer package film that wraps the electrode assembly, a body portion in which at least the electrode assembly is wrapped by the outer package film, a bulging portion at which the outer package film bulges outward from the body portion, and a first seal portion, at which mutually facing surfaces of the outer package film are sealed, in the bulging portion. The method for manufacturing the electrical storage device includes: a wrapping process of wrapping the electrode assembly by the outer package film to form the body portion and the bulging portion; and a jig disposition process of disposing a fixing jig that suppresses movement of the bulging portion with respect to the body portion, the jig disposition process being performed later than the wrapping process.

### Advantageous Effects of Invention

According to the electrical storage device, the fixing jig, and the method for manufacturing an electrical storage device related to the present invention, it is possible to suitably seal an electrode assembly with an outer packaging.

### Brief Description of Drawings

[Fig. 1A] Fig. 1A is a perspective view of a state where a fixing jig has been removed from an electrical storage device according to an embodiment.
[Fig. 1B] Fig. 1B is a diagram related to a method for measuring sealing strength of a second seal portion of the electrical storage device in Fig. 1A.
[Fig. 2] Fig. 2 is a sectional view illustrating a layer configuration of an outer package film of the electrical storage device in Fig. 1A.
[Fig. 3] Fig. 3 is a side view of a lid included in the electrical storage device in Fig. 1A.
[Fig. 4] Fig. 4 is a diagram of a state in which the outer package film included in the electrical storage device in Fig. 1A is unfolded.
[Fig. 5] Fig. 5 is a front view of an electrical storage device in Fig. 1A in a state where a bulging portion is folded.
[Fig. 6] Fig. 6 is a perspective view of a state in which a fixing jig is attached to the electrical storage device in Fig. 1A.
[Fig. 7] Fig. 7 is a perspective view of the fixing jig in Fig. 6.
[Fig. 8] Fig. 8 is a front view of the electrical storage device in Fig. 5 in a state before the bulging portion is folded.
[Fig. 9] Fig. 9 is a front view of a state where the fixing jig is attached to the electrical storage device in Fig. 8 and the bulging portion is folded.
[Fig. 10] Fig. 10 is a perspective view of the fixing jig in Fig. 9.
[Fig. 11] Fig. 11 is a flowchart illustrating an example of a method for manufacturing the electrical storage device in Fig. 1A.
[Fig. 12] Fig. 12 is a diagram related to a third process in the method for manufacturing the electrical storage device of Fig. 1A.
[Fig. 13] Fig. 13 is a diagram related to a fourth process in the method for manufacturing the electrical storage device in Fig. 1A.
[Fig. 14] Fig. 14 is a diagram related to a fourth process and a fifth process in the method for manufacturing the electrical storage device in Fig. 1A.
[Fig. 15] Fig. 15 is a diagram illustrating another example of the fourth process and the fifth process in the method for manufacturing the electrical storage device in Fig. 1A.
[Fig. 16] Fig. 16 is a diagram related to a fifth process in the method for manufacturing the electrical storage device in Fig. 1A.
[Fig. 17] Fig. 17 is a diagram related to a sixth process in the method for manufacturing the electrical storage device in Fig. 1A.
[Fig. 18] Fig. 18 is a diagram related to a seventh process in the method for manufacturing the electrical storage device in Fig. 1A.
[Fig. 19] Fig. 19 is a diagram related to an eighth process in the method for manufacturing the electrical storage device in Fig. 1A.
[Fig. 20] Fig. 20 is a perspective view of a fixing jig in a modification example.
[Fig. 21] Fig. 21 is a perspective view of a fixing jig in another modification example.
[Fig. 22] Fig. 22 is a perspective view of an electrical storage device in a state where a fixing jig in yet another modification example is attached.
[Fig. 23] Fig. 23 is a perspective view of an electrical storage device in a state where a fixing jig in yet another modification example is attached.
[Fig. 24] Fig. 24 is a perspective view of an electrical storage device in a modification example.
[Fig. 25] Fig. 25 is a perspective view of an electrical storage device in another modification example.
[Fig. 26] Fig. 26 is a perspective view of an electrical storage device in yet another modification example.
[Fig. 27] Fig. 27 is a perspective view of an electrical storage device in yet another modification example.

### Description of Embodiments

Hereinafter, an electrical storage device according to an embodiment of the present invention will be described with reference to the drawings. In this specification, a numerical range indicated by the term "A to B" means "A or more" and "B or less". For example, the expression of "2 to 15 mm" means 2 mm or more and 15 mm or less.

### [1. Embodiments]

### <1-1. Configuration of electrical storage device>

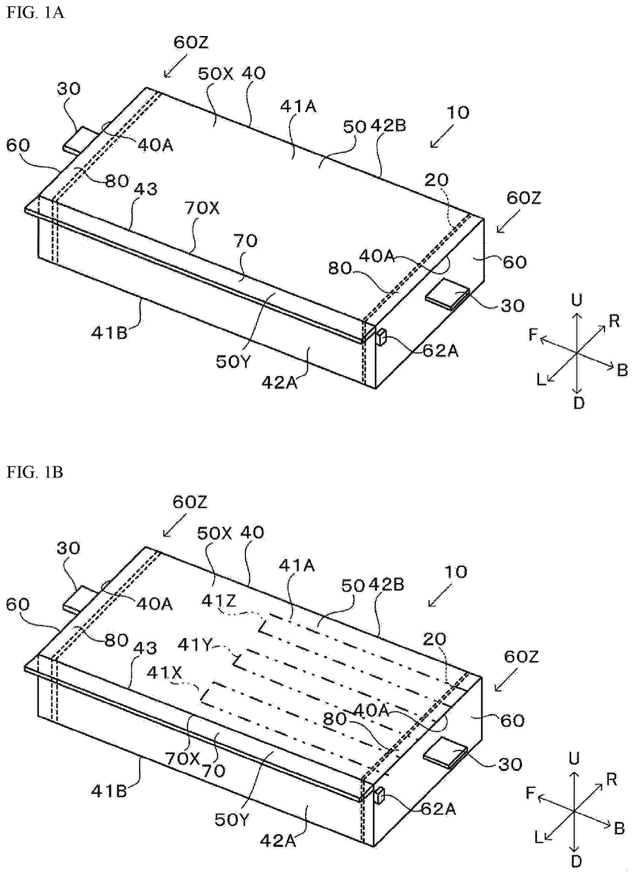

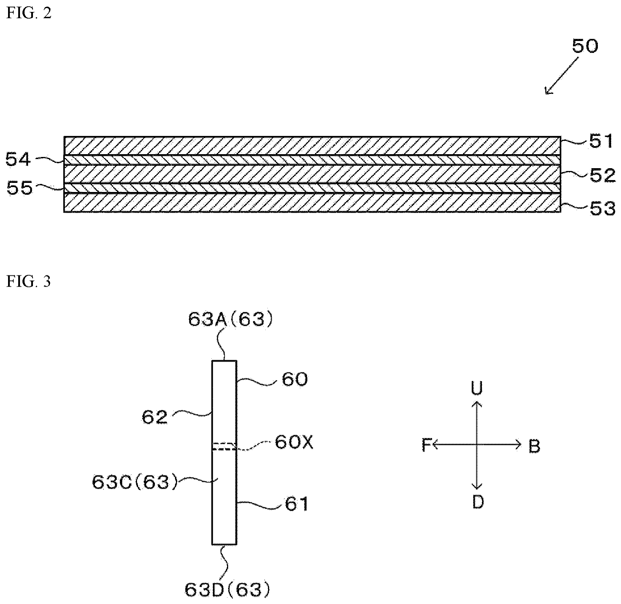

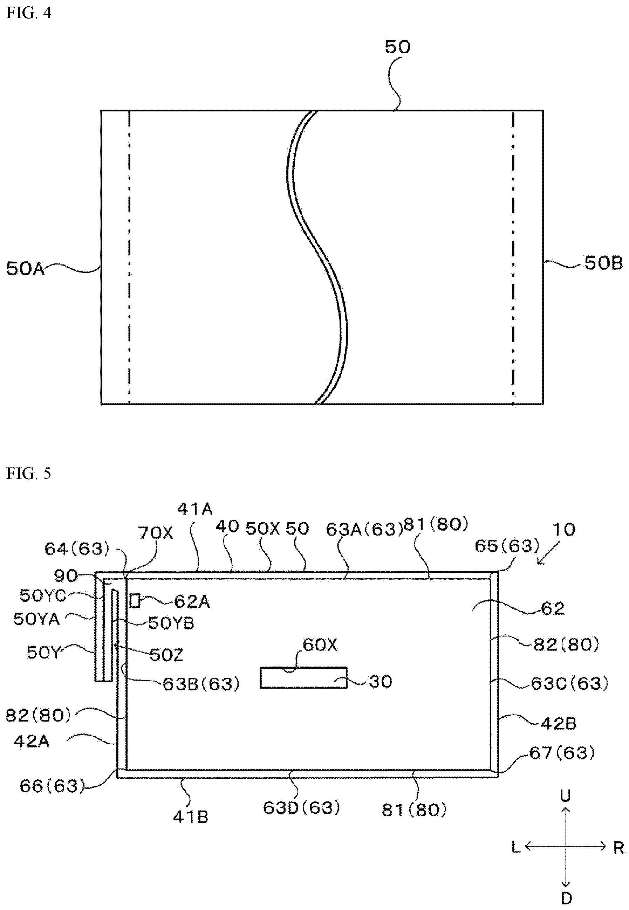

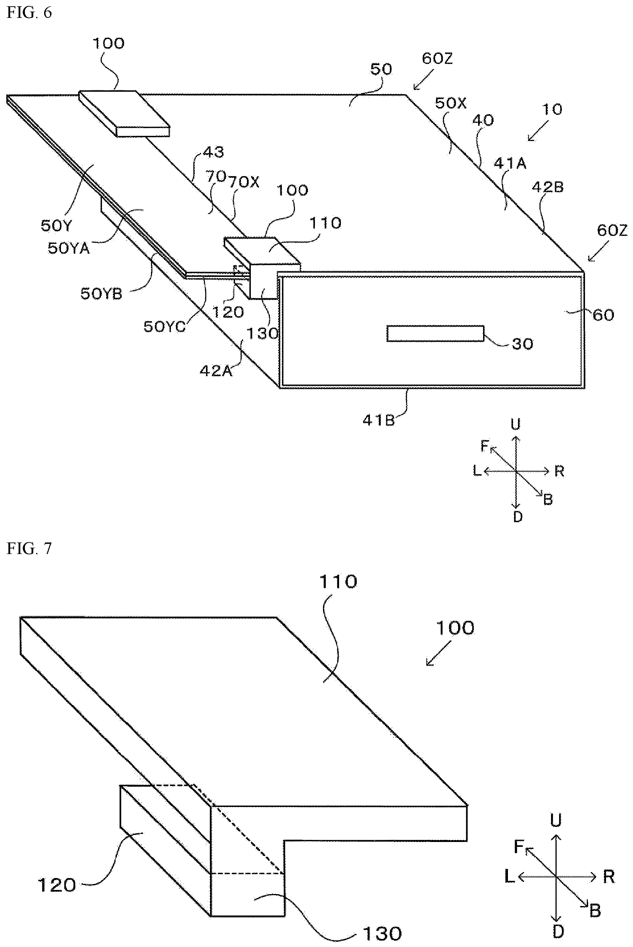

Fig. 1A is a perspective view schematically illustrating a state of an electrical storage device 10 in a state where a fixing jig 100 has been removed therefrom in an embodiment. Fig. 1B is a diagram related to a method for measuring sealing strength of a second seal portion 80 of the electrical storage device 10 in Fig. 1A. Fig. 2 is a sectional view illustrating a layer configuration of an outer package film 50 included in the electrical storage device 10 in Fig. 1A. Fig. 3 is a side view of a lid 60 included in the electrical storage device 10 in Fig. 1A. Fig. 4 is a view of a state in which the outer package film 50 included in the electrical storage device 10 in Fig. 1A is unfolded. Fig. 5 is a front view of the electrical storage device 10 in Fig. 1A in a state where a part including a bulging portion 50Y is folded. Fig. 6 is a perspective view of a state where a fixing jig 100 is attached to the electrical storage device 10 in Fig. 1A. Note that in Fig. 1A, the direction along the arrow UD indicates a thickness direction of the electrical storage device 10, the direction along the arrow LR indicates a width direction of the electrical storage device 10, and the direction along the arrow FB indicates a depth direction of the electrical storage device 10. The directions indicated by each of arrows UDLRFB will also be the same in the subsequent drawings.

The electrical storage device 10 includes an electrode assembly 20, electrode terminals 30, and an outer packaging 40. The electrode assembly 20 includes, for example, electrodes (positive electrode and negative electrode) forming an electrical storage member, such as a lithium ion battery, a capacitor, an all-solid-state battery, a semi-solid-state battery, a pseudo-solid-state battery, a polymer battery, an all-polymer battery, a lead storage battery, a nickel-metal hydride storage battery, a nickel-cadmium storage battery, a nickel-iron storage battery, a nickel-zinc storage battery, a silver oxide-zinc storage battery, a metal-air battery, a polyvalent cation battery, or a capacitor, and a separator. In the present embodiment, the shape of the electrode assembly 20 is substantially a cuboid. Note that the "substantially cuboid" includes a perfect cuboid and also a solid that can be seen as a cuboid by modifying the shape of a part of the outer surface thereof, for example. The shape of the electrode assembly 20 may be, for example, a cylinder or a polygonal column.

In the present embodiment, the electrical storage device 10 includes two electrode terminals 30. The electrode terminals 30 are metal terminals for use in input and output of electrical power in the electrode assembly 20. One end part of each electrode terminal 30 is electrically connected to an electrode (a positive electrode or a negative electrode) included in the electrode assembly 20. The other end part of each electrode terminal 30 protrudes outward from an end edge of the outer packaging 40, for example. Note that the electrode terminal 30 is only required to enable input and output of electrical power in the electrode assembly 20, and is not required to protrude from the outer packaging 40, for example. In a case where lids 60 described later are made from, for example, metal, the lids 60 may also function as the electrode terminal 30, and in this case, the lids 60 having a function as an electrode terminal may, but are not required to, protrude from the outer packaging 40.

The metal material for forming the electrode terminal 30 is, for example, aluminum, nickel, copper or the like. For example, in a case where the electrode assembly 20 is a lithium ion battery, the electrode terminal 30 connected to the positive electrode is typically made from aluminum or the like, and the electrode terminal 30 connected to the negative electrode is typically made from copper, nickel or the like. Note that the outermost layer of the electrode assembly 20 is not necessarily an electrode, and may be, for example, a protective tape or a separator.

The outer packaging 40 seals the electrode assembly 20. The outer packaging 40 includes the outer package film 50 and the pair of lids 60. The outer package film 50 wraps the electrode assembly 20 such that a pair of opening parts 40A are formed. In the present embodiment, the outer package film 50 is wound around the electrode assembly 20 such that the pair of opening parts 40A are formed. The outer packaging 40 includes a body portion 50X and a bulging portion 50Y. The body portion 50X is a portion where at least the electrode assembly 20 is wrapped by the outer package film 50. In the present embodiment, the body portion 50X is a part where the electrode assembly 20 and the lids 60 are wrapped by the outer package film 50. The bulging portion 50Y is a part of the outer package film 50 bulging from the body portion 50X. The body portion 50X includes a pair of first surfaces 41A and 41B and a pair of second surfaces 42A and 42B. The pair of first surfaces 41A and 41B have substantially the same size. The pair of second surfaces 42A and 42B have substantially the same size. The area of the pair of first surfaces 41A and 41B is larger than the area of the pair of second surfaces 42A and 42B. The pair of lids 60 are disposed on the lateral sides of the electrode assembly 20, respectively, to close the pair of opening parts 40A.

For example, there is a method in which a housing portion (recess) for housing the electrode assembly 20 is formed in the outer package film 50 through cold molding. However, it is not always easy to form a deep housing portion by such a method. If an attempt is made to form a deep (for example, 15 mm in terms of molding depth) accommodating portion (recess) by cold molding, pinholes or cracks are generated in the outer package film 50, leading to a rise in possibility that battery performance is degraded. On the other hand, since the outer packaging 40 seals the electrode assembly 20 by winding the outer package film 50 around the electrode assembly 20 in the present embodiment, the electrode assembly 20 can be easily sealed regardless of the thickness of the electrode assembly 20. In order to reduce a dead space between the electrode assembly 20 and the outer package film 50 to thereby improve the volume energy density of the electrical storage device 10, and also in order to improve cooling efficiency, a state where the outer package film 50 is in contact with and is wound around the outer surface of the electrode assembly 20 is preferable. In an all-solid-state battery, it is necessary to eliminate the space between the electrode assembly 20 and the outer package film 50 from the viewpoint that it is necessary to uniformly apply a high pressure from the outer surface of the battery for exhibiting battery performance, and therefore, the state where the outer package film 50 is in contact with and is wound around the outer surface of the electrode assembly 20 is preferable.

The outer package film 50 is, for example, a laminate (laminate film) including a base material layer 51, a barrier layer 52, and a heat-sealable resin layer 53 in the stated order. Note that the outer package film 50 is not required to include all these layers, and may be free of, for example, the barrier layer 52. In other words, the outer package film 50 is only required to be made from a material that is flexible and easy to bend, and the outer package film 50 may be made from, for example, a resin film.

The base material layer 51 included in the outer package film 50 is a layer for imparting heat resistance to the outer package film 50 to suppress generation of pinholes which may occur during processing or distribution. The base material layer 51 includes, for example, at least one of a stretched polyester resin layer and a stretched polyamide resin layer. For example, by the base material layer 51 including at least one of a stretched polyester resin layer and a stretched polyamide resin layer, the barrier layer 52 can be protected during processing of the outer package film 50 to suppress breakage of the outer package film 50. From the viewpoint of increasing the tensile elongation of the outer package film 50, the stretched polyester resin layer is preferably a biaxially stretched polyester resin layer, and the stretched polyamide resin layer is preferably a biaxially stretched polyamide resin layer. Furthermore, from the viewpoint of excellent piercing strength or impact strength, the stretched polyester resin layer is more preferably a biaxially stretched polyethylene terephthalate (PET) film, and the stretched polyamide resin layer is more preferably a biaxially stretched nylon (ONy) film. Note that the base material layer 51 may include both a stretched polyester resin layer and a stretched polyamide resin layer. From the viewpoint of film strength, the thickness of the base material layer 51 is, for example, preferably 5 µm to 300 µm, more preferably 5 µm to 150 µm.

The barrier layer 52 is a layer which suppresses at least ingress of moisture. The barrier layer 52 is joined to, for example, the base material layer 51 with an adhesive layer 54 interposed therebetween. Examples of the barrier layer 52 include metal foils, deposited films and resin layers having a barrier property. Examples of the deposited film include metal deposited films, inorganic oxide deposited films and carbon-containing inorganic oxide deposited films, and examples of the resin layer include those of polyvinylidene chloride, fluorine-containing resins such as polymers containing chlorotrifluoroethylene (CTFE) as a main component, polymers containing tetrafluoroethylene (TFE) as a main component, polymers having a fluoroalkyl group, and polymers containing a fluoroalkyl unit as a main component, and ethylene vinyl alcohol copolymers. Examples of the barrier layer 52 include resin films provided with at least one of these deposited films and resin layers. A plurality of barrier layers 52 may be provided. Preferably, the barrier layer 52 contains a layer formed of a metal material. Specific examples of the metal material forming the barrier layer 52 include aluminum alloys, stainless steel, titanium steel and steel sheets, and in a case where the metal material is used as a metal foil, it is preferable that the metal material includes at least one of an aluminum alloy foil and a stainless steel foil.

In the barrier layer 52, the layer formed of the metal material described above may contain a metal recycled material. Examples of the metal recycled material include recycled materials of an aluminum alloy, stainless steel, titanium steel, or a steel plate. These recycled materials can be each obtained by a known method. The recycled material of the aluminum alloy can be obtained by, for example, a manufacturing method described in International Publication No. WO 2022/092231. The barrier layer 52 may be formed only of a recycled material, or may be formed of a mixed material of a recycled material and a virgin material. Note that the metal recycled material is a metal material obtained by, for example, collecting, isolating and purifying various products used in a so-called commercial market, wastes from manufacturing processes, and the like, such that the material can be reused. The virgin material from a metal material is a new metal material obtained by refining a metal natural resource (raw material), which is not a recycled material.

The aluminum alloy foil is more preferably a soft aluminum alloy foil formed of, for example, an annealed aluminum alloy from the viewpoint of improving the moldability or followability of the outer package film 50, and is preferably an aluminum alloy foil containing iron from the viewpoint of further improving the moldability or the followability. In the aluminum alloy foil containing iron (100 mass%), the content of iron is preferably 0.1 mass% to 9.0 mass%, more preferably 0.5 mass% to 2.0 mass%. By the content of iron being 0.1 mass% or more, it is possible to obtain the outer package film 50 having more excellent moldability. By the content of iron being 9.0 mass% or less, it is possible to obtain the outer package film 50 having more excellent flexibility. Examples of the soft aluminum alloy foil include aluminum alloy foils having a composition specified in JIS H4160: 1994 A8021H-O, JIS H4160: 1994 A8079H-O, JIS H4000: 2014 A8021P-O, or JIS H4000: 2014 A8079P-O. If necessary, silicon, magnesium, copper, manganese or the like may be added. Softening can be performed by annealing or the like. From the viewpoint of improving mechanical strength of the outer package film 50, the aluminum alloy foil is more preferably a hard aluminum alloy foil made of, for example, a work-hardened aluminum alloy. Examples of the hard aluminum alloy foil include aluminum alloy foils having a composition specified in JIS H4160: 1994 A8021H-H18, JIS H4160: 1994 A8079H-H18, JIS H4000: 2014 A8021P-H14, or JIS H4000: 2014 A8079P-H14.

Examples of the stainless steel foil include austenitic stainless steel foils, ferritic stainless steel foils, austenitic/ferritic stainless steel foils, martensitic stainless steel foils, and precipitation-hardened stainless steel foils. From the viewpoint of providing the outer package film 50 having further excellent moldability, it is preferable that the stainless steel foil is formed of austenitic stainless steel.

Specific examples of the austenitic stainless steel constituting the stainless steel foil include SUS304, SUS301, and SUS316L, and among these, SUS304 is especially preferable.

In a case where the barrier layer 52 is a metal foil, the barrier layer 52 may perform a function as a barrier layer suppressing at least ingress of moisture, and has a thickness of, for example, about 5 µm to 200 µm. The thickness of the barrier layer 52 is preferably about 85 µm or less, more preferably about 50 µm or less, still more preferably about 40 µm or less, particularly preferably about 35 µm or less. Also, the thickness of the barrier layer 52 is preferably about 9.0 µm or more, more preferably about 20 µm or more, still more preferably about 25 µm or more. The thickness of the barrier layer 52 is preferably in the range of about 9.0 µm to 85 µm, about 9.0 µm to 50 µm, about 9.0 µm to 40 µm, about 9.0 µm to 35 µm, about 20 µm to 85 µm, about 20 µm to 50 µm, about 20 µm to 40 µm, about 20 µm to 35 µm, about 25 µm to 85 µm, about 25 µm to 50 µm, about 25 µm to 40 µm, or about 25 µm to 35 µm. In a case where the barrier layer 52 is formed of an aluminum alloy foil, the thickness thereof is especially preferably in above-described range. From the viewpoint of imparting high moldability and high rigidity to the outer package film 50, the thickness of the barrier layer 52 is preferably about 35 µm or more, more preferably about 45 µm or more, still more preferably about 50 µm or more, still more preferably about 55 µm or more, and preferably about 200 µm or less, more preferably about 85 µm or less, still more preferably about 75 µm or less, still more preferably about 70 µm or less, and is preferably in the range of about 35 µm to 200 µm, about 35 µm to 85 µm, about 35 µm to 75 µm, about 35 µm to 70 µm, about 45 µm to 200 µm, about 45 µm to 85 µm, about 45 µm to 75 µm, about 45 µm to 70 µm, about 50 µm to 200 µm, about 50 µm to 85 µm, about 50 µm to 75 µm, about 50 µm to 70 µm, about 55 µm to 200 µm, about 55 µm to 85 µm, about 55 µm to 75 µm, or about 55 µm to 70 µm. By the outer package film 50 having high moldability, deep drawing molding can be facilitated, which contributes to an increase in capacity of the electrical storage device. Although the weight of the electrical storage device increases when the capacity of the electrical storage device is increased, enhancement of the rigidity of the outer package film 50 can contribute to high sealing performance of the electrical storage device. In particular, in a case where the barrier layer 52 is made of a stainless steel foil, the thickness of the stainless steel foil is preferably about 60 µm or less, more preferably about 50 µm or less, still more preferably about 40 µm or less, even more preferably about 30 µm or less, particularly preferably about 25 µm or less. The thickness of the stainless steel foil is preferably about 10 µm or more, more preferably about 15 µm or more. The thickness of the stainless steel foil is preferably in the range of about 10 µm to 60 µm, about 10 µm to 50 µm, about 10 µm to 40 µm, about 10 µm to 30 µm, about 10 µm to 25 µm, about 15 µm to 60 µm, about 15 µm to 50 µm, about 15 µm to 40 µm, about 15 µm to 30 µm, or about 15 µm to 25 µm.

In a case where the barrier layer 52 is an aluminum foil, it is preferable that a corrosion-resistant film be provided at least on a surface on a side opposite to the base material layer 51 for prevention of dissolution, corrosion, and the like. The barrier layer 52 may include a corrosion-resistant film on each of both surfaces. Here, the corrosion-resistant film refers to a thin film obtained by subjecting the surface of the barrier layer 52 to, for example, hydrothermal denaturation treatment such as boehmite treatment, chemical conversion treatment, anodization treatment, plating treatment with nickel, chromium or the like, or corrosion prevention treatment by applying a coating agent to impart corrosion resistance (for example, acid resistance and alkali resistance) to the barrier layer 52. Specifically, the corrosion-resistant film means a film which improves the acid resistance of the barrier layer 52 (acid-resistant film), a film which improves the alkali resistance of the barrier layer 52 (alkali-resistant film), or the like. One of treatments for forming the corrosion-resistant film may be performed, or two or more thereof may be performed in combination. In addition, not only one layer but also multiple layers can be formed. Further, of these treatments, the hydrothermal denaturation treatment and the anodization treatment are treatments in which the surface of the metal foil is dissolved with a treatment agent to form a metal compound excellent in corrosion resistance. The definition of the chemical conversion treatment may include these treatments. In a case where the barrier layer 52 is provided with the corrosion-resistant film, the barrier layer 52 is regarded as including the corrosion-resistant film.

The corrosion-resistant film exhibits the effects of preventing delamination between the barrier layer 52 (for example, an aluminum alloy foil) and the base material layer 51 during molding of the outer package film 50; preventing dissolution and corrosion of the surface of the barrier layer 52, particularly dissolution and corrosion of aluminum oxide present on the surface of the barrier layer 52 when the barrier layer 52 is an aluminum alloy foil, by hydrogen fluoride generated by reaction of an electrolyte with moisture; improving the bondability (wettability) of the surface of the barrier layer 52; preventing delamination between the base material layer 51 and the barrier layer 52 during heat-sealing; and preventing delamination between the base material layer 51 and the barrier layer 52 during molding.

The heat-sealable resin layer 53 is joined to, for example, the barrier layer 52 with an adhesive layer 55 interposed therebetween. The heat-sealable resin layer 53 included in the outer package film 50 is a layer that imparts a sealing property to the outer package film 50 by heat sealing. Examples of the heat-sealable resin layer 53 include resin films formed of a polyester-based resin such as a polyethylene terephthalate-based resin or a polybutylene terephthalate-based resin, a polyolefin-based resin such as a polyethylene-based resin or a polypropylene-based resin, or an acid-modified polyolefin-based resin obtained by graft-modifying the polyolefin-based resin with an acid such as maleic anhydride. From the viewpoint of sealability and strength, the thickness of the heat-sealable resin layer 53 is, for example, preferably 20 µm to 300 µm, more preferably 40 µm to 150 µm.

The outer package film 50 preferably includes one or more layers having a buffer function (hereinafter, referred to as "buffer layers") outside the heat-sealable resin layer 53, more preferably outside the barrier layer 52. The buffer layer may be laminated outside the base material layer 51, and the base material layer 51 may also function as a buffer layer. In a case where the outer package film 50 includes a plurality of buffer layers, the plurality of buffer layers may lie side-by-side, or may be laminated with the base material layer 51, the barrier layer 52, or the like interposed between the buffer layers.

A material for forming the buffer layer can be arbitrarily selected from materials having a cushioning property. The material having a cushioning property is, for example, rubber, a nonwoven fabric, or a foamed sheet. The rubber is, for example, natural rubber, fluororubber, or silicon rubber. The rubber hardness is preferably about 20 to 90. The material for forming a nonwoven fabric is preferably a material having excellent heat resistance. In a case where the buffer layer is made from a nonwoven fabric, the lower limit of the thickness of the buffer layer is preferably 100 µm, more preferably 200 µm, or still more preferably 1,000 µm. In a case where the buffer layer is made from a nonwoven fabric, the upper limit of the thickness of the buffer layer is preferably 5,000 µm, or more preferably 3,000 µm. The thickness of the buffer layer is preferably in the range of 100 µm to 5,000 µm, 100 µm to 3,000 µm, 200 µm to 5,000 µm, 200 µm to 3,000 µm, 1,000 µm to 5,000 µm, or 1,000 µm to 3,000 µm. The thickness of the buffer layer is most preferably in the range of 1,000 µm to 3,000 µm among these.

In a case where the buffer layer is made from rubber, the lower limit of the thickness of the buffer layer is preferably 0.5 mm. In a case where the buffer layer is made from rubber, the upper limit of the thickness of the buffer layer is preferably 10 mm, more preferably 5 mm, still more preferably 2 mm. In a case where the buffer layer is made from rubber, the thickness of the buffer layer is preferably in the range of 0.5 mm to 10 mm, 0.5 mm to 5 mm, or 0.5 mm to 2 mm.

In a case where the outer package film 50 includes a buffer layer, the buffer layer functions as a cushion, so that breakage of the outer package film 50 due to the impact of falling of the electrical storage device 10 or handling during manufacturing of the electrical storage device 10 is suppressed.

Each lid 60 has, for example, a plate shape, and is made from, for example, a resin material. The lid 60 may be formed by, for example, cold-molding the outer package film 50, or may be a metal molded article. The material constituting the lid 60 may include at least two or more kinds of materials out of a metal oxide, a carbon material, and a rubber material, and may include a metal oxide, a carbon material, and a rubber material. The lid 60 includes a lid body 60A. The lid body 60A includes a first surface 61, a second surface 62, and a lid sealing portion 63. The first surface 61 faces the electrode assembly 20. The second surface 62 is a surface on a side opposite to the first surface 61. The lid sealing portion 63 is connected to the first surface 61 and the second surface 62, and is heat-sealed to the heat-sealable resin layer 53 of the outer package film 50. The lid sealing portion 63 includes a first sealing surface 63A, a second sealing surface 63B, a third sealing surface 63C, and a fourth sealing surface 63D. The first sealing surface 63A forms the upper surface of the lid 60. The first sealing surface 63A extends in a first direction (LR direction in the present embodiment) in front view of the lid 60. The second sealing surface 63B and the third sealing surface 63C are connected to the first sealing surface 63A and form side surfaces of the lid 60. The second sealing surface 63B and the third sealing surface 63C extend in a second direction (UD direction in the present embodiment) crossing the first direction in front view of the lid 60. In the present embodiment, the first direction and the second direction orthogonally cross each other in front view of the lid 60. The first direction and the second direction are not required to orthogonally cross each other in front view of the lid 60. The fourth sealing surface 63D forms the lower surface of the lid 60. The fourth sealing surface 63D extends in a first direction (LR direction in the present embodiment) in front view of the lid 60.

In a case where the lid 60 has a plate shape, the lid 60 is preferably thick to some extent to suppress deformation of the outer packaging 40 even in a case where electrical storage devices 10 are stacked on top of another. From another point of view, in the case where the lid 60 has a plate shape, the lid sealing portion 63 of the lid 60 is preferably wide to some extent to ensure that the lid sealing portion 63 of the lid 60 and the outer package film 50 can be suitably heat-sealed when the second seal portion 80 is formed. The minimum value of the thickness of the lid 60 is, for example, 1.0 mm, more preferably 3.0 mm, still more preferably 4.0 mm. The maximum value of the thickness of the lid 60 is, for example, 20 mm, more preferably 15 mm, still more preferably 10 mm. The maximum value of the thickness of the lid 60 may be 20 mm or more. The thickness of the material for forming the lid 60 is preferably in the range of 1.0 mm to 20 mm, 1.0 mm to 15 mm, 1.0 mm to 10 mm, 3.0 mm to 20 mm, 3.0 mm to 15 mm, 3.0 mm to 10 mm, 4.0 mm to 20 mm, 4.0 mm to 15 mm, or 4.0 mm to 10 mm. In the present embodiment, in the case where the lid 60 is described as having a plate shape, an aspect in which the lid 60 is made only of the film specified by Japanese Industrial Standard (JIS), [Packaging Terminology] Standard is not included. Note that the thickness of the lid 60 may vary depending on a portion of the lid 60. In a case where the thickness of the lid 60 varies depending on a portion, the thickness of the thickest portion of the lid 60 is defined as a thickness of the lid 60.

The lid sealing portion 63 further includes boundaries 64, 65, 66 and 67. The boundary 64 is a boundary between the first sealing surface 63A and the second sealing surface 63B. The boundary 65 is a boundary between the first sealing surface 63A and the third sealing surface 63C. The boundary 66 is a boundary between the fourth sealing surface 63D and the second sealing surface 63B. The boundary 67 is a boundary between the fourth sealing surface 63D and the third sealing surface 63C. The shapes of the boundaries 64 to 67 may be angular, or may be rounded off by round chamfering. In the present embodiment, the boundaries 64 to 67 are angular.

In the present embodiment, the lid 60 is configured to contain a resin material. Here, "configured to contain a resin material" means that the content of the resin material is 50 mass% or more, preferably 80 mass% or more, more preferably 90 mass% or more, and still more preferably 95 mass% or more when the total of materials constituting the lid 60 is defined as 100 mass%. In other words, the materials constituting the lid 60 can contain materials other than the resin material in addition to the resin material.

Specific examples of the resin include resins such as polyester, polyolefin, polyamide, an epoxy resin, an acrylic resin, a fluororesin, polyurethane, a silicone resin, and a phenol resin, and thermoplastic resins such as modified products of these resins. The resin material may be a mixture of these resins, may be a copolymer thereof, or a modified product of the copolymer. Among them, the resin material is preferably a heat-sealable resin such as polyester or polyolefin, and more preferably polyolefin. In a case where the resin material is a resin, the lid 60 may be molded by any molding method.

Specific examples of the polyester include polyethylene terephthalate, polybutylene terephthalate, polyethylene naphthalate, polybutylene naphthalate, polyethylene isophthalate and copolyester. Examples of the copolyester include copolyesters having ethylene terephthalate as a main repeating unit. Specific examples thereof include copolymer polyesters that are polymerized with ethylene isophthalate and include ethylene terephthalate as a main repeating unit (hereinafter, abbreviated as follows after polyethylene(terephthalate/isophthalate)), polyethylene(terephthalate/adipate), polyethylene(terephthalate/sodium sulfoisophthalate), polyethylene(terephthalate/sodium isophthalate), polyethylene (terephthalate/phenyl-dicarboxylate) and polyethylene(terephthalate/decane dicarboxylate). Among these, the resin material is preferably polybutylene terephthalate from the viewpoint of enhancing heat resistance and pressure resistance.

Specific examples of polyolefin include polyethylenes such as low-density polyethylene, medium-density polyethylene, high-density polyethylene and linear low-density polyethylene; ethylene-α-olefin copolymers; polypropylene such as homopolypropylene, block copolymers of polypropylene (for example, block copolymers of propylene and ethylene) and random copolymers of polypropylene (for example, random copolymers of propylene and ethylene); propylene-α-olefin copolymers; and terpolymers of ethylene-butene-propylene. The polyolefin resin in the case of a copolymer may be a block copolymer or a random copolymer. Among them, the resin material is preferably polypropylene because it is excellent in heat-sealability and electrolytic solution resistance.

The resin as the resin material may contain a filler as necessary. Specific examples of the filler include glass beads, graphite, glass fiber, and carbon fiber. By the resin as the resin material containing the filler, deformation resistance of the lid 60 against a temperature change can be improved.

The melt mass flow rate of the resin material contained in the material constituting the lid 60 is preferably in the range of 1 g/10 min to 80 g/10 min, and more preferably in the range of 5 g/10 min to 60 g/10 min. The melt mass flow rate is measured on the basis of JIS K7210-1:2014.

In another example, the lid 60 may be configured to include a metal material. Here, "configured to include a metal material" means that the content of the metal material is 50 mass% or more, preferably 80 mass% or more, more preferably 90 mass% or more, and still more preferably 95 mass% or more when the total of materials constituting the lid 60 is defined as 100 mass%. In other words, the materials constituting the lid 60 can contain materials other than the metal material in addition to the metal material. The metal material constituting the lid 60 can be arbitrarily selected. The metal material constituting the lid 60 is, for example, aluminum, an aluminum alloy, nickel, copper, a copper alloy, or stainless steel. Specific examples of austenitic stainless steel constituting the stainless steel include SUS304, SUS301, and SUS316L. For example, in a case where the electrode assembly 20 is a lithium ion battery, the lid 60 connected to the positive electrode is preferably made of aluminum or an aluminum alloy. The lid 60 connected to the negative electrode is preferably made of nickel, copper, or a copper alloy. The material constituting the lid 60 connected to the negative electrode may be copper plated with nickel. The material constituting the lid 60 may include a recycled metal material. In a case where the lid 60 is configured to include a metal material, a joint surface of the lid 60 to be joined to the resin material may include a corrosion-resistant film from the viewpoint of suppressing dissolution, corrosion, and the like.

In the present embodiment, a through-hole 60X into which the electrode terminal 30 is inserted is formed in the lid 60. The through-hole 60X penetrates through the first surface 61 and the second surface 62. In a state where the electrode assembly 20 is housed, the electrode terminal 30 protrudes to the outside of the outer packaging 40 by passing through the through-hole 60X formed in the lid 60. A small gap between the through-hole 60X of the lid 60 and the electrode terminal 30 is filled with, for example, a resin. Note that in the electrical storage device 10, the position at which the electrode terminal 30 protrudes to the outside can be arbitrarily selected. For example, the electrode terminal 30 may protrude to the outside from a hole formed in any one of the six surfaces that the outer packaging 40 has. In this case, a small gap between the outer packaging 40 and the electrode terminal 30 is filled with, for example, a resin. Although the lid 60 and the electrode terminal 30 are provided separately in the electrical storage device 10, the lid 60 and the electrode terminal 30 may be integrally formed. Note that in a case where the electrode terminal 30 does not protrude from the end edge of the outer packaging 40, the through-hole 60X is not required to be formed in the lid 60.

In the present embodiment, the first seal portion 70 is formed by heat-sealing the mutually facing surfaces (heat-sealable resin layer 53) of the outer package film 50 in the bulging portion 50Y in a state where the outer package film 50 is wound around the electrode assembly 20 to have the opening parts 40A. In the present embodiment, the first seal portion 70 is formed by entirely heat-sealing the mutually facing surfaces (heat-sealable resin layer 53) of the outer package film 50 in the bulging portion 50Y.

The first seal portion 70 is configured to include a part at which a first edge 50A and a second edge 50B of the outer package film 50 are caused to overlap one another as illustrated in Fig. 4. The first seal portion 70 extends in a longitudinal direction (FB direction) of the outer packaging 40. In the outer packaging 40, the position at which the first seal portion 70 is formed can be arbitrarily selected. In the present embodiment, a root 70X of the first seal portion 70 is preferably located on a side 43 of a boundary between the first surface 41A and the second surface 42A of the outer packaging 40. The root 70X of the first seal portion 70 may be located on an arbitrary surface of the outer packaging 40. From the viewpoint of configuring the electrical storage device 10 in a small size, the bulging portion 50Y is preferably folded on, for example, the first surface 41A or the second surface 42A of the outer packaging 40 when the electrical storage device 10 is used. In the present embodiment, the bulging portion 50Y is folded toward the second surface 42A of the outer packaging 40 when the electrical storage device 10 is used as illustrated in Fig. 5.

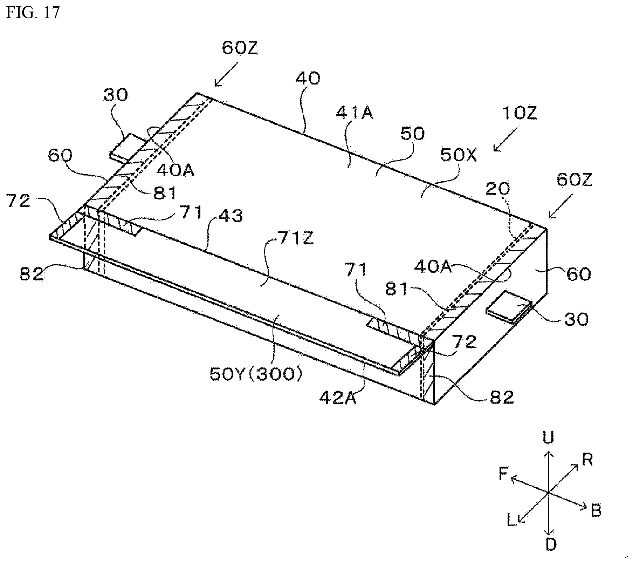

In the present embodiment, a second seal portion 80 is formed by heat-sealing the heat-sealable resin layer 53 of the outer package film 50 and the lid sealing portion 63 of the lid 60. The second seal portion 80 has a second long side sealing portion 81 and a second short side sealing portion 82 (see Fig. 17 for both). The second long side sealing portion 81 is a part where the heat-sealable resin layer 53 of the outer package film 50 and the first sealing surface 63A and the fourth sealing surface 63D of the lid 60 are sealed. The second short side sealing portion 82 is a part where the heat-sealable resin layer 53 of the outer package film 50 and the second sealing surface 63B and the third sealing surface 63C of the lid 60 are sealed.

Hereinafter, sealing strength between the heat-sealable resin layer 53 of the outer package film 50 and the lid sealing portion 63 of the lid 60 may be referred to as sealing strength of the second seal portion 80. Note that the sealing strength of the second seal portion 80 is the sealing strength between the heat-sealable resin layer 53 and the lid 60 at the second long side sealing portion 81, that is, at the lid sealing portion 63 extending in the LR (width) direction in Fig. 1A.

The sealing strength of the second seal portion 80 is measured as follows. First, a notch is formed at a part of the outer package film 50 constituting the first surface 41 of the outer packaging 40, and three strip-shaped members 41X, 41Y, and 41Z (see the two-dotted chain line in Fig. 1B) aligned in the LR direction are formed. The widths of the three strip-shaped members 41X, 41Y, and 41Z in the LR direction are 15 mm. End parts of the strip-shaped members 41X, 41Y, and 41Z are joined to the lid 60 at the second seal portion 80. The length of the lid 60 in the LR direction is 45 mm or more. Next, the sealing strength of each of strip-shaped members 41X, 41Y, and 41Z is measured by pulling the end parts of the strip-shaped members 41X, 41Y, and 41Z on the side opposite to the end parts thereof joined to the lid 60 upward (the direction opposite to the first surface 41B) in the UD direction. In the present embodiment, the sealing strength of the second seal portion 80 is an average value of the sealing strengths of the strip-shaped members 41X, 41Y, and 41Z. In a case where the length of the lid 60 in the LR direction is less than 45 mm, three strip-shaped members having an arbitrary width X mm, which is less than 15 mm, are formed, and the sealing strength of the three strip-shaped members is measured by a method similar to that adopted when the length of the lid 60 in the LR direction is 45 mm or more. Each obtained sealing strength is divided by an arbitrary width X mm and multiplied by 15 to be converted into the sealing strength of the three strip-shaped members at the width of 15 mm. The sealing strength of the second seal portion 80 is an average value of the sealing strengths of the three strip-shaped members converted into the value at the width of 15 mm. Note that the sealing strength of the second seal portion 80 in a case where the lid 60 is divided into a plurality of parts including long sides and short sides is the sealing strength at the long side portion of the lid sealing portion 63 of the plurality of parts.

From the viewpoint of suitably maintaining the state where the electrode assembly 20 is sealed with the outer packaging 40, the sealing strength of the second seal portion 80 is preferably 40 N/15 mm or more, more preferably 50 N/15 mm or more, still more preferably 60 N/15 mm or more, still more preferably 70 N/15 mm or more, still more preferably 85 N/15 mm or more. In a case where the sealing strength of the second seal portion 80 is 40 N/15 mm or more, the state where the electrode assembly 20 is sealed with the outer packaging 40 is suitably maintained even if the electrical storage device 10 is used for, for example, several years (less than 10 years). In a case where the sealing strength of the second seal portion 80 is 85 N/15 mm or more, the state where the electrode assembly 20 is sealed with the outer packaging 40 is suitably maintained even if the electrical storage device 10 is used for, for example, 10 years or more. The sealing strength of the second seal portion 80 is preferably 300 N/15 mm or less. The sealing strength of the second seal portion 80 is preferably in the range of 40 N/15 mm to 300 N/15 mm, 50 N/15 mm to 300 N/15 mm, 60 N/15 mm to 300 N/15 mm, 70 N/15 mm to 300 N/15 mm, or 85 N/15 mm to 300 N/15 mm.

Since the bulging portion 50Y can move with respect to the body portion 50X, material fatigue is likely to occur at a part of the bulging portion 50Y including the root 70X of the first seal portion 70, in particular. At the portion of the outer package film 50 where material fatigue has occurred, the barrier layer 52, the base material layer 51, and the heat-sealable resin layer 53 may be delaminated, a cracking may occur, and the outer package film 50 may break. In a typical example, the electrical storage device 10 may be moved to an arbitrary place in a state where the bulging portion 50Y (first seal portion 70) is gripped. In such a case, the bulging portion 50Y can move with respect to the body portion 50X, and there is thus a concern that the part of the outer package film 50 including the root of the bulging portion 50Y, in other words, the part including the root 70X of the first seal portion 70 may break and sealing performance of the electrical storage device 10 may be degraded.

In a process of manufacturing the electrical storage device 10, which will be described later, the part constituting the bulging portion 50Y of the outer package film 50 may be widened, and an electrolytic solution may be injected thereinto. Therefore, there is a concern that the part of the outer package film 50 including the root of the bulging portion 50Y, in other words, a part where the root 70X of the first seal portion 70 is scheduled to be formed may break, and sealing performance of the electrical storage device 10 may be degraded.

In the present embodiment, the fixing jigs 100 that suppress movement of the bulging portion 50Y with respect to the body portion 50X are attached to at least one of the electrical storage device 10 as a completed product and an electrical storage device as an unfinished product (hereinafter, referred to as an "intermediate body 10Z").

Fig. 6 is a perspective view of the electrical storage device 10 as a completed product in a state where the fixing jigs 100 are attached thereto. Fig. 7 is a perspective view of each fixing jig 100 in Fig. 6.

As illustrated in Fig. 6, the fixing jigs 100 are attached to both end parts of the bulging portion 50Y in the FB direction in the electrical storage device 10 as a completed product in the present embodiment. The fixing jig 100 may be attached only to one end part of the bulging portion 50Y in the FB direction.

The material constituting the fixing jig 100 can be arbitrarily selected. Examples of the material constituting the fixing jigs 100 include a resin material, a metal material, a rubber material, a metal oxide, or a carbon material. Each fixing jig 100 includes a first fixing portion 110, a second fixing portion 120, and a connecting portion 130. The material constituting the first fixing portion 110, the material constituting the second fixing portion 120, and the material constituting the connecting portion 130 may be the same material or different materials. The first fixing portion 110, the second fixing portion 120, and the connecting portion 130 may be integrally formed, or may be configured separately and joined to each other. In the present embodiment, the first fixing portion 110, the second fixing portion 120, and the connecting portion 130 are integrally formed of, for example, a resin material.

The first fixing portion 110 has a plate shape, and is disposed to straddle the first surface 50YA of the bulging portion 50Y and the first surface 41A of the outer packaging 40. The first fixing portion 110 is in contact with the first surface 50YA of the bulging portion 50Y and the first surface 41A of the outer packaging 40. The first fixing portion 110 suppresses movement of the bulging portion 50Y toward the first surface 41A around the root 70X of the first seal portion 70 at the center. At least a part of the first fixing portion 110 may or may not be joined to the first surface 50YA of the bulging portion 50Y and the first surface 41A of the outer packaging 40. The first fixing portion 110 can be joined to the first surface 50YA of the bulging portion 50Y and the first surface 41A of the outer packaging 40 by an arbitrary means such as an adhesive or heat sealing. In the present embodiment, the first fixing portion 110 is not joined to the first surface 50YA of the bulging portion 50Y and the first surface 41A of the outer packaging 40.

The second fixing portion 120 has a plate shape and is disposed to be in contact with the second surface 50YB of the bulging portion 50Y. The second fixing portion 120 prevents the bulging portion 50Y from moving toward the second surface 42A around the root 70X of the first seal portion 70 at the center by supporting the bulging portion 50Y. At least a part of the second fixing portion 120 may or may not be joined to the second surface 50YB of the bulging portion 50Y. The second fixing portion 120 can be joined to the second surface 50YB of the bulging portion 50Y by an arbitrary means such as an adhesive or heat sealing, for example. In the present embodiment, the second fixing portion 120 is not joined to the second surface 50YB of the bulging portion 50Y.

The lengths of the first fixing portion 110 and the second fixing portion 120 in the FB direction can be arbitrarily selected. In the present embodiment, the length of the first fixing portion 110 is longer than the length of the second fixing portion 120 in the FB direction. In the FB direction, the length of the first fixing portion 110 may be shorter than the length of the second fixing portion 120, or may be the same as the length of the second fixing portion 120.

The connecting portion 130 connects the first fixing portion 110 and the second fixing portion 120. The connecting portion 130 may or may not be in contact with the side surface 50YC of the bulging portion 50Y. In the present embodiment, the connecting portion 130 is in contact with the side surface 50YC of the bulging portion 50Y. At least a part of the connecting portion 130 may or may not be joined to the side surface 50YC of the bulging portion 50Y. The connecting portion 130 can be joined to the side surface 50YC of the bulging portion 50Y by an arbitrary means such as an adhesive or heat sealing, for example. In the present embodiment, the connecting portion 130 is not joined to the side surface 50YC of the bulging portion 50Y.

In the electrical storage device 10, the internal pressure of the electrical storage device 10 may rise due to a change in volumes of the positive active material and the negative active material of the electrode assembly 20 with charging and discharging, generation of gas, and the like. In a case where the internal pressure of the electrical storage device 10 rises, the outer package film 50 is stretched due to expansion of the outer packaging 40, and there is thus a concern that the mechanical strength of the outer package film 50 may be degraded. The fixing jig 100 also has an effect of suppressing expansion of the first surface 41A and the second surface 42A, in particular, of the outer packaging 40 in the case where the internal pressure of the electrical storage device 10 rises.

The fixing jig 100 also has an effect of suppressing delamination of the first seal portion 70 and the second seal portion 80 in the case where the internal pressure of the outer packaging 40 rises. The fixing jig 100 has a higher effect of suppressing delamination of the first seal portion 70 and the second seal portion 80 as the contact area of the first fixing portion 110 with the first surface 41A and the first surface 50YA increases. The fixing jig 100 has a higher effect of suppressing delamination of the second seal portion 80 (the second short side sealing portion 82, in particular) as the contact area of the second fixing portion 120 and the connecting portion 130 with the second surface 42A increases.

In a case where vacuuming is performed in the process of manufacturing the electrical storage device 10, the outer packaging 40 may contract. In a case where at least a part of the fixing jig 100 is joined to an arbitrary surface of the outer packaging 40, the fixing jig 100 can suppress contraction of the outer packaging 40.

In the process of manufacturing the electrical storage device 10, a predetermined range including the root 70X of the first seal portion 70 is heat-sealed a plurality of times and is thus significantly damaged. The heat-sealable resin layer 53 of the outer package film 50 is thin at the root 70X of the first seal portion 70. Therefore, from the viewpoint of miniaturization of the electrical storage device 10, there is a concern that the barrier layer 52, the base material layer 51, and the heat-sealable resin layer 53 may be delaminated at the part including the root 70X of the first seal portion 70 and cracking may occur in the outer package film 50 in a case where the bulging portion 50Y is folded from the root 70X as a starting point toward the first surface 41A or the second surface 42A. In a case where cracking has occurred at the part including the root 70X of the outer package film 50, there is a concern that sealing performance of the outer packaging 40 may be degraded, and for example, an electrolytic solution or the like may leak. In the present embodiment, in order to enhance the strength of the root 70X and the periphery thereof, the first seal portion 70 includes a part with a thickness HA increasing (hereinafter, a "thick film portion 90") toward the root 70X.

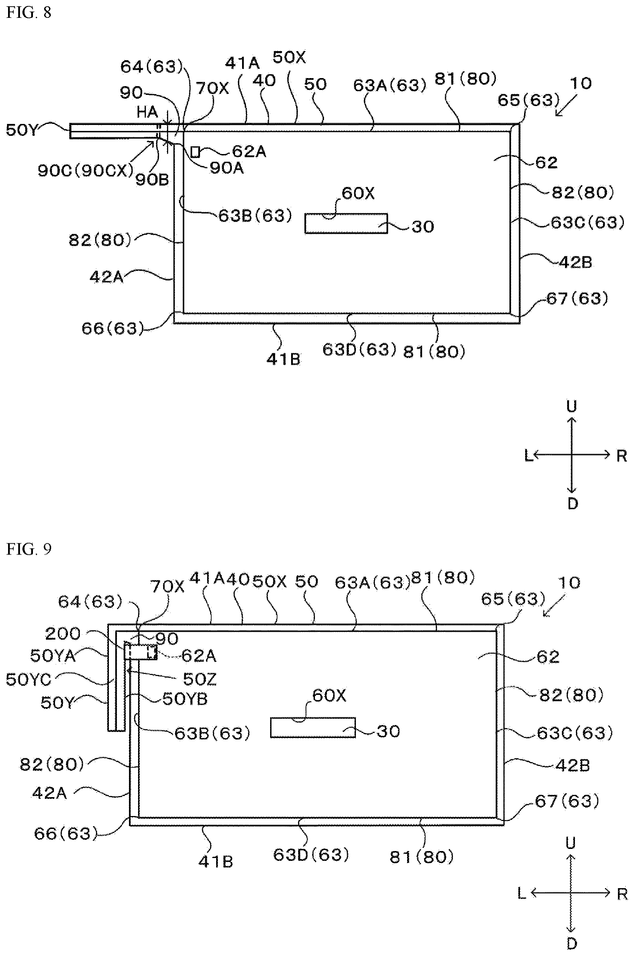

Fig. 8 is a front view of the electrical storage device 10 in a state before the bulging portion 50Y of the electrical storage device 10 in Fig. 5 is folded. The thick film portion 90 includes a starting point 90A and an ending point 90B further spaced apart from the root 70X than the starting point 90A. In the present embodiment, the starting point 90A is located further outward than the surface of the outer package film 50 at the second seal portion 80. A thickness HA of the first seal portion 70 locally increases at the starting point 90A toward the outside of the bulging portion 50Y. The thickness HA of the first seal portion 70 locally decreases at the ending point 90B toward the outside of the bulging portion 50Y. In the electrical storage device 10, the bulging portion 50Y can be folded toward the first surface 41A or the second surface 42A at the ending point 90B. In another example, the bulging portion 50Y can be folded at an arbitrary point, as a start point, between the ending point 90B and the starting point 90A. Since the bulging portion 50Y is folded at a position away from the root 70X, in other words, at a position where the bulging portion 50Y is less damaged due to the heat sealing, occurrence of cracking in the outer package film 50 at the root 70X is suppressed. From the viewpoint of suppressing occurrence of cracking in the outer package film 50, the bulging portion 50Y is preferably folded at a location at 0.1 mm or more away from the root 70X. Note that from the viewpoint of easily recognizing the folding position of the first seal portion 70, it is preferable that a fold line 90C be formed in advance at the ending point 90B or between the starting point 90A and the ending point 90B. The fold line 90C is preferably formed substantially entirely in the FB direction in the bulging portion 50Y. The fold line 90C is preferably formed at a position at 0.1 mm or more away from the root 70X in the LR direction. From the viewpoint of easily folding the bulging portion 50Y, a notch 90CX that does not penetrate through the outer package film 50 is preferably formed along the fold line 90C. In another example, the fold line 90C may be formed by additionally sealing the outer package film 50.

In the electrical storage device 10 as a completed product, there is a concern that the bulging portion 50Y may be folded from the root 70X in a case where an external force acts in a state in which the bulging portion 50Y is folded at a position away from the root 70X. In the electrical storage device 10 as the completed product, in order to maintain the folded state where the bulging portion 50Y is located away from the root 70X, fixing jigs 200 are preferably disposed at least in a gap 50Z between the bulging portion 50Y and the body portion 50X. The gap 50Z is formed between the second surface 50YB of the bulging portion 50Y and the second surface 42B of the outer packaging 40. Note that in a case where the bulging portion 50Y is folded toward the first surface 41A, the gap 50Z is formed between the first surface 50YA of the bulging portion 50Y and the first surface 41A of the outer packaging 40. Therefore, it is preferable that the fixing jigs 200 be disposed in the gap between at least the first surface 50YA and the first surface 41A.

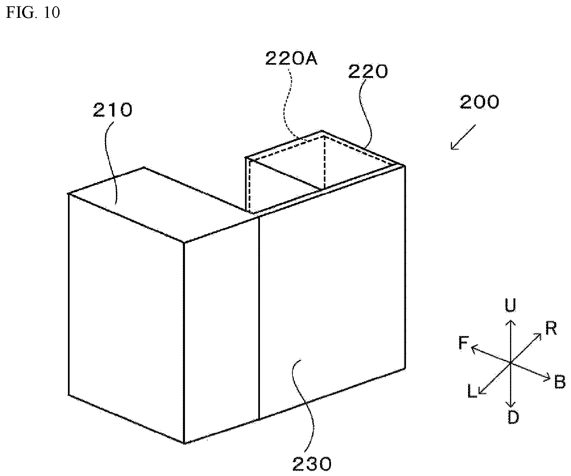

Fig. 9 is a front view of the electrical storage device 10 as a completed product in a state where the fixing jigs 200 are disposed. Fig. 10 is a perspective view of each fixing jig 200 in Fig. 9. In the present embodiment, the fixing jigs 200 are attached to both end parts of the bulging portion 50Y in the FB direction. The fixing jig 200 may be attached only to one end part of the bulging portion 50Y in the FB direction. Note that instead of at least one of the fixing jigs 200 attached to both end parts of the bulging portion 50Y in the FB direction, the fixing jig 100 illustrated in Fig. 6 may be attached to the electrical storage device 10 as a completed product.

The material constituting the fixing jigs 200 can be arbitrarily selected. Examples of the material constituting the fixing jigs 200 include a resin material, a metal material, a rubber material, a metal oxide, or a carbon material. Each fixing jig 200 includes a first fixing portion 110, a coupling portion 220, and a connecting portion 230. The material constituting the first fixing portion 210, the material constituting the coupling portion 220, and the material constituting the connecting portion 230 may be the same material or different materials. The first fixing portion 210, the coupling portion 220, and the connecting portion 230 may be integrally formed, or may be configured separately and joined to each other. In the present embodiment, the first fixing portion 210, the coupling portion 220, and the connecting portion 230 are integrally formed of, for example, a resin material.

The first fixing portion 210 has a plate shape and is inserted into the gap 50Z between the bulging portion 50Y and the body portion 50X. The first fixing portion 210 may or may not be in contact with the second surface 50YB of the bulging portion 50Y and the second surface 42A of the outer packaging 40. In the present embodiment, the first fixing portion 210 is in contact with the second surface 50YB of the bulging portion 50Y and the second surface 42A of the outer packaging 40. The first fixing portion 210 suppresses movement of the bulging portion 50Y toward the second surface 42A around the root 70X of the first seal portion 70 at the center. At least a part of the first fixing portion 210 may or may not be joined to the second surface 50YB of the bulging portion 50Y and the second surface 42A of the outer packaging 40. The first fixing portion 210 can be joined to the second surface 50YB of the bulging portion 50Y and the second surface 42A of the outer packaging 40 by an arbitrary means such as an adhesive or heat sealing, for example. In the present embodiment, the first fixing portion 210 is not joined to the second surface 50YB of the bulging portion 50Y and the second surface 42A of the outer packaging 40.

The length of the first fixing portion 210 in the FB direction can be arbitrarily selected. In the present embodiment, the length of the first fixing portion 210 is shorter than the length of the bulging portion 50Y in the FB direction. In the FB direction, the length of the first fixing portion 210 may be longer than the length of the bulging portion 50Y, or may be the same as the length of the bulging portion 50Y.

The coupling portion 220 is coupled to the lid 60. In the present embodiment, the coupling portion 220 has a hollow box shape including a recessed portion 220A. The fixing jig 200 and the lid 60 are connected by inserting a projecting portion 62A formed at an arbitrary position on the second surface 62 of the lid 60 into the recessed portion 220A. The coupling portion 220 may have a projecting portion. Each fixing jig 200 and the lid 60 may be coupled by the projecting portion of the coupling portion 220 being inserted into the recessed portion formed at an arbitrary location in the second surface 62 of the lid 60. The coupling portion 220 is preferably made of a material softer than the materials of the first fixing portion 210 and the connecting portion 230 to facilitate coupling to the projecting portion or the recessed portion formed in the lid 60.

The connecting portion 230 has, for example, a plate shape and connects the first fixing portion 210 and the coupling portion 220.

The fixing jigs 200 also have an effect of suppressing expansion of the outer packaging 40 and an effect of suppressing delamination of the first seal portion 70 and the second seal portion 80 similarly to the fixing jigs 100. In a case where at least parts of the fixing jigs 200 are joined to an arbitrary surface of the outer packaging 40, an effect of suppressing contraction of the outer packaging 40 is obtained.

### <1-2. Method for manufacturing electrical storage device>

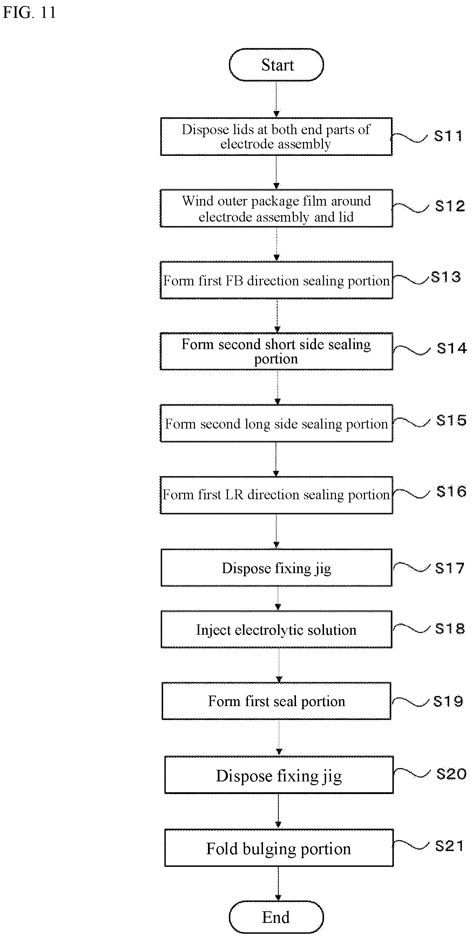

Fig. 11 is a flowchart illustrating an example of a method for manufacturing the electrical storage device 10. The method for manufacturing the electrical storage device 10 includes, for example, a first process, a second process, a third process, a fourth process, a fifth process, a sixth process, a seventh process, an eighth process, a ninth process, a tenth process, and an eleventh process. The first to eleventh processes are performed by, for example, a manufacturing apparatus for the electrical storage device 10. Note that the first to eleventh processes are merely convenient labels for the processes in the method for manufacturing the electrical storage device 10 and do not necessarily mean the order of the processes. The order of the following processes can be arbitrarily changed.

In the first process in Step S11, the manufacturing apparatus disposes the lid 60 with the electrode terminals 30 attached to both end parts of the electrode assembly 20 (hereinafter, referred to as a "lid unit 60Z"). When the first process is completed, the electrode terminals 30 and the electrode of the electrode assembly 20 are electrically connected. In the first process, the lid 60 may be connected to the electrode terminals 30 that have been electrically connected to the electrode assembly 20.

The second process (wrapping process) in Step S12 is carried out later than the first process. In the second process, the manufacturing apparatus wraps the electrode assembly 20 by the outer package film 50 such that the body portion 50X and the bulging portion 50Y are formed. Note that since the bulging portion 50Y has a function as a gas pocket 300 as will be described later, the bulging portion 50Y formed in the second process has a larger area in plan view than the bulging portion 50Y included in the electrical storage device 10 as a completed product. In other words, in order to form the gas pocket 300, the outer package film 50 with a larger area than the outer package film 50 that the electrical storage device 10 as a completed product has is used in the second process. In the second process, the manufacturing apparatus winds the outer package film 50 around the electrode assembly 20 and the lid 60 with tension applied to the outer package film 50 while restricting the movement of the electrode assembly 20 and the lid 60 by a restriction means. The restriction means is, for example, a groove into which the electrode assembly 20 and the lid 60 are fitted. The restriction means may be an apparatus that applies an external force to the electrode assembly 20 and the lid 60 so that the electrode assembly 20 and the lid 60 do not move. The restriction means may be an apparatus that applies a force to the electrode assembly 20 and the lid 60 in a direction opposite to a direction in which the outer package film 50 is pulled. Note that the restriction means may include a roller for removing wrinkles of the outer package film 50 by running on the outer package film 50 with the outer package film 50 being pulled.

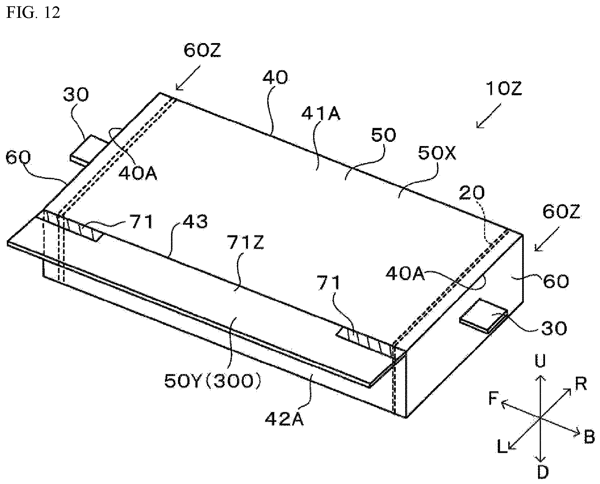

The third process in Step S13 is carried out after the second process. As illustrated in Fig. 12, the manufacturing apparatus forms a first FB direction sealing portion 71 having an unsealed portion 71Z at the center in the third process. Note that the hatched portion in Fig. 8 illustrates an example of a region where the first FB direction sealing portion 71 is to be formed.

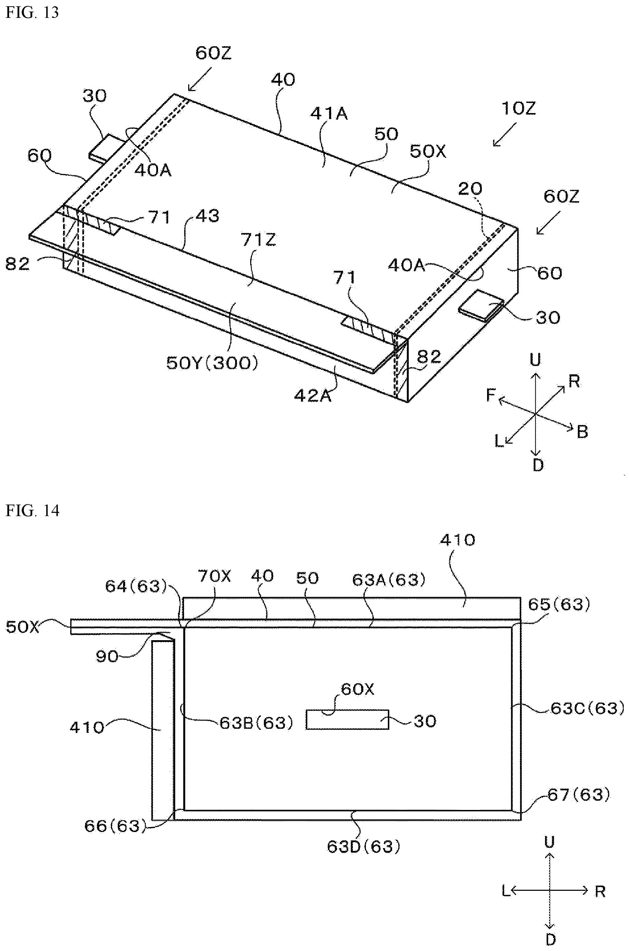

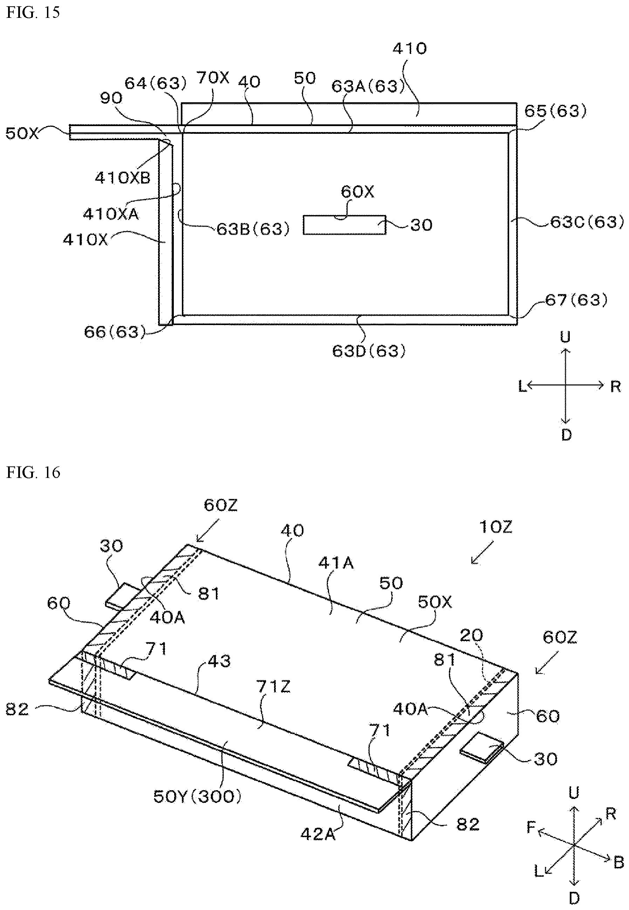

The fourth process in Step S14 is carried out after the third process. As illustrated in Fig. 13, the manufacturing apparatus forms the second short side sealing portion 82 in the fourth process. As illustrated in Fig. 14, the manufacturing apparatus preferably forms the second short side sealing portion 82 such that a sealing bar 410 does not come into contact with the thick film portion 90, for example, in the fourth process. In another example of the fourth process, the manufacturing apparatus preferably forms the second short side sealing portion 82 using a sealing bar 410X that has a sealing surface 410XA and a sealing surface 410XB as illustrated in Fig. 15. The sealing surface 410XA is a sealing surface having a shape along the second sealing surface 63B and the third sealing surface 63C. The sealing surface 410XB is a sealing surface along the outer contour shape of the thick film portion 90. Note that the hatched portion in Fig. 13 illustrates an example of a region where the second short side sealing portion 82 is to be formed.

The fifth process in Step S15 is carried out after the fourth process. As illustrated in Fig. 16, the manufacturing apparatus forms the second long side sealing portion 81 to maintain the thickness HA of the thick film portion 90 in the fifth process. As illustrated in Fig. 14, the manufacturing apparatus forms the second long side sealing portion 81 such that the sealing bar 410 does not come into contact with the thick film portion 90, for example, in the fifth process. Note that the hatched portion in Fig. 16 illustrates an example of a region where the second long side sealing portion 81 is to be formed.

The sixth process in Step S16 is carried out after the fifth process. As illustrated in Fig. 17, the manufacturing apparatus forms the first LR direction sealing portion 72 in the sixth process. In the sixth process, the first LR direction sealing portion 72 is formed to partially overlap with the first FB direction sealing portion 71 at a part including the side 43. Note that the hatched portion in Fig. 17 illustrates an example of a region where the first LR direction sealing portion 72 is to be formed. When the sixth process is completed, the gas pocket 300 with a larger area in plan view than the bulging portion 50Y included in the electrical storage device 10 as a completed product is completed.

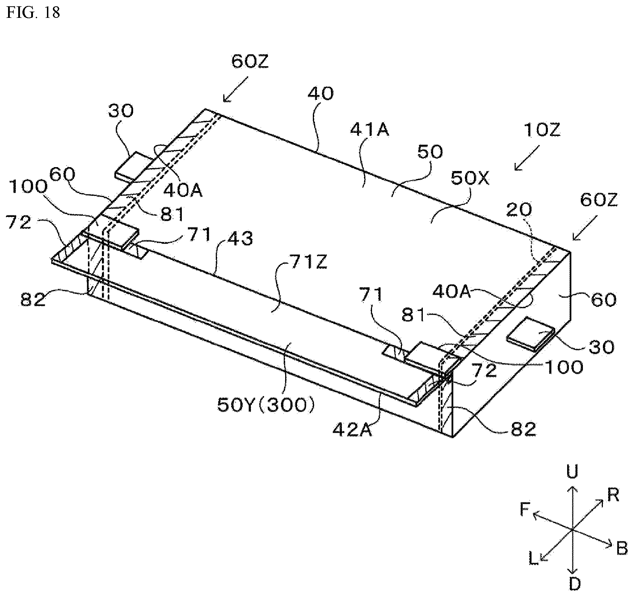

The seventh process (jig disposition process) in Step S17 is carried out after the sixth process. The seventh process may be carried out at an arbitrary timing after the second process. As illustrated in Fig. 18, the manufacturing apparatus disposes the fixing jigs 100 at both end parts of the bulging portion 50Y in the FB direction in the seventh process. The seventh process may be carried out by an operator.

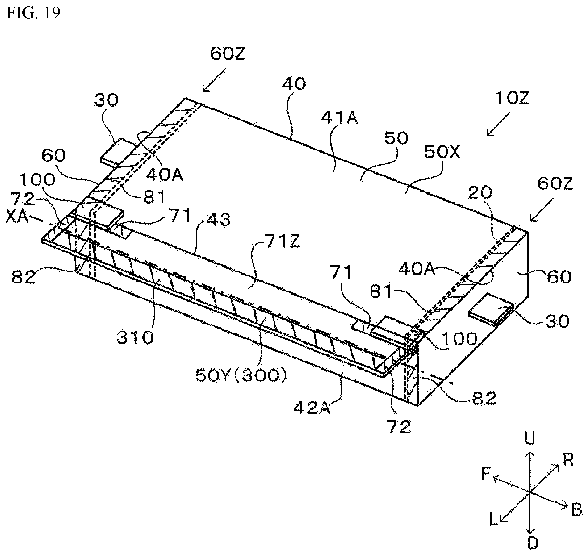

The eighth process in Step S18 is carried out after the seventh process. In the eighth process, the manufacturing apparatus injects an electrolytic solution via an opening of the gas pocket 300. As illustrated in Fig. 19, a pocket seal portion 310 is formed by an edge of the gas pocket 300 including the opening being joined after the electrolytic solution is injected. An aging process is carried out after the eighth process. The gas generated by the aging process is stored in the gas pocket 300. The gas stored in the gas pocket 300 is discharged through an opening formed by cutting a part of the gas pocket 300. The gas pocket 300 is cut along the one-dot chain line XA illustrated in Fig. 19, for example, to form the opening for discharging the gas.

The ninth process in Step S19 is carried out after the eighth process and after completion of the aging process. In the ninth process, the manufacturing apparatus forms the first seal portion 70. In the ninth process, the first FB direction sealing portion 71 may or may not be sealed again.

The tenth process (jig disposition process) in Step S20 is carried out later than the ninth process. In the tenth process, the manufacturing apparatus disposes the fixing jigs 200 instead of the fixing jigs 100 at both end parts of the bulging portion 50Y in the FB direction. Note that the tenth process may be carried out by an operator. Note that Step S20 may be omitted and the fixing jigs 100 disposed in Step S17 may be used as they are.

The eleventh process in Step S21 is carried out later than the tenth process. In the eleventh process, the manufacturing apparatus folds the bulging portion 50Y including the first seal portion 70. Note that the eleventh process may be performed earlier than the tenth process. In other words, the fixing jigs 200 may be disposed after the bulging portion 50Y including the first seal portion 70 is folded. The eleventh process may be performed by an operator.

### <1-3. Action and effect of electrical storage device>

According to the electrical storage device 10, movement of the bulging portion 50Y with respect to the body portion 50X is suppressed since the fixing jigs 100 and 200 are included. Since breakage of the part of the outer package film 50 constituting the bulging portion 50Y is suppressed, high sealing performance of the electrical storage device 10 is achieved.

### [2. Modifications]

The above-described embodiment is an example of possible forms of the electrical storage device, the fixing jig, and the method for manufacturing the electrical storage device according to the present invention and is not intended to limit the forms. The electrical storage device, the fixing jig, and the method for manufacturing the electrical storage device according to the present invention can adopt forms different from the forms exemplified in the embodiment. An example thereof is a form in which a part of the configuration of the embodiment is replaced, changed or omitted, or a form in which a new configuration is added to the embodiment. Some examples of modifications of the embodiment will be described below. Note that the following modifications can be combined as long as they are not technically contradictory.

<2-1>
In the above-described embodiment, the specific configuration of the fixing jigs 100 can be arbitrarily changed as long as the movement of the bulging portion 50Y with respect to the body portion 50X can be suppressed with the configuration. For example, the fixing jigs 100 may include at least the first fixing portion 110 or the second fixing portion 120. In a case where the fixing jigs 100 are formed only of the first fixing portion 110, the first fixing portion 110 is preferably joined to at least parts of the first surface 41A of the outer packaging 40 and the first surface 50YA of the bulging portion 50Y by an adhesive, heat sealing, or the like. In a case where the fixing jigs 100 are formed only of the second fixing portion 120, the second fixing portion 120 is joined to at least parts of the second surface 42A of the outer packaging 40 and the second surface 50YB of the bulging portion 50Y by an adhesive, heat sealing, or the like.

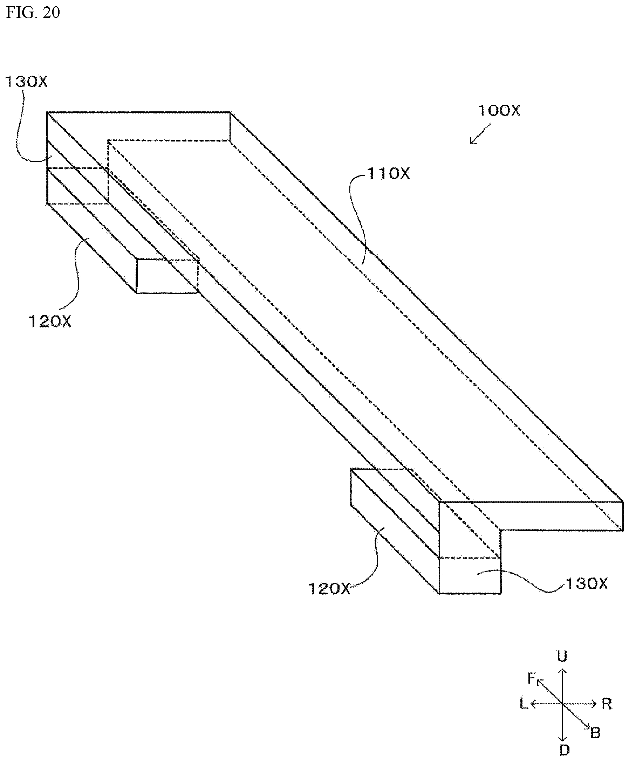

Fig. 20 is a perspective view of a fixing jig 100X of a modification. The fixing jig 100X includes a first fixing portion 110X, a pair of second fixing portions 120X, and a pair of connecting portions 130X. The first fixing portion 110X has a plate shape and extends in the FB direction. The length of the first fixing portion 110X in the FB direction is substantially equal to the length of the bulging portion 50Y. The pair of second fixing portions 120X have plate shapes and are connected to an end part of the first fixing portion 110X in the FB direction via the pair of connecting portions 130. The length of the pair of second fixing portions 120X in the FB direction is shorter than the length of the bulging portion 50Y. The fixing jigs 100X also have an effect of suppressing expansion of the outer packaging 40 and an effect of suppressing delamination of the first seal portion 70 and the second seal portion 80 similarly to the fixing jigs 100. In a case where at least parts of the fixing jigs 100X are joined to an arbitrary surface of the outer packaging 40, an effect of suppressing contraction of the outer packaging 40 is obtained. Since the length of the first fixing portion 110X in the FB direction is substantially equal to the length of the bulging portion 50Y, the fixing jigs 100X have a particularly high effect of suppressing delamination of the first seal portion 70.

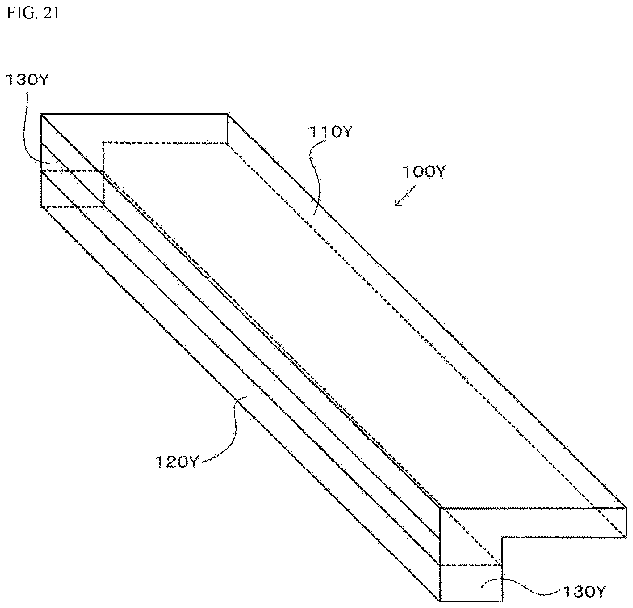

Fig. 21 is a perspective view of a fixing jig 100Y in another modification. The fixing jig 100Y includes a first fixing portion 110Y, a second fixing portion 120Y, and a pair of connecting portions 130Y. The first fixing portion 110Y has a plate shape and extends in the FB direction. The length of the first fixing portion 110Y in the FB direction is substantially equal to the length of the bulging portion 50Y. The second fixing portion 120Y has a plate shape and extends in the FB direction. The length of the second fixing portion 120Y in the FB direction is substantially equal to the length of the bulging portion 50Y. The pair of connecting portions 130Y connects the end part of the first fixing portion 110Y and the end part of the second fixing portion 120Y in the FB direction. The fixing jigs 100Y also have an effect of suppressing expansion of the outer packaging 40 and an effect of suppressing delamination of the first seal portion 70 and the second seal portion 80 similarly to the fixing jigs 100. In a case where at least parts of the fixing jigs 100Y are joined to an arbitrary surface of the outer packaging 40, an effect of suppressing contraction of the outer packaging 40 is obtained. Since the fixing jig 100Y sandwiches the first seal portion 70 between the first fixing portion 110Y and the second fixing portion 120Y, the effect of suppressing delamination of the first seal portion 70 is particularly high. Also, the fixing jigs 100Y can more suitably suppress expansion of the second surface 42A because of the large contact area between the connecting portion 130Y and the second surface 42A.

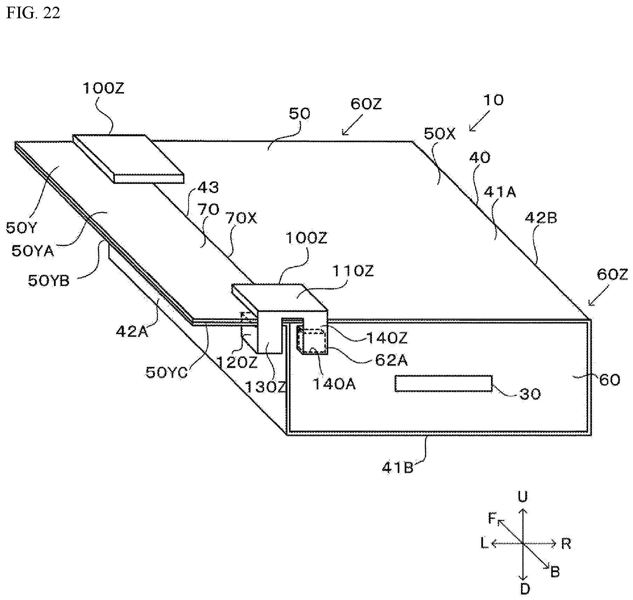

Fig. 22 is a perspective view of the electrical storage device 10 including fixing jigs 100Z in yet another modification. Each fixing jig 100Z includes a first fixing portion 110Z, a second fixing portion 120Z, a connecting portion 130Z, and a coupling portion 140Z. The first fixing portion 110Z has a configuration similar to that of the first fixing portion 110 that the fixing jig 100 of the embodiment has. The second fixing portion 120Z has a configuration similar to that of the second fixing portion 120 that the fixing jig 100 of the embodiment has. The connecting portion 130Z has a configuration similar to that of the connecting portion 130 that the fixing jig 100 of the embodiment has. The coupling portion 140Z is connected to the first fixing portion 110Z and is coupled to the lid 60. In this modification, the coupling portion 140Z has a hollow box shape including a recessed portion 140A. The fixing jig 140 and the lid 60 are coupled by a projecting portion 62A formed at an arbitrary location in the second surface 62 of the lid 60 being inserted into the recessed portion 140A. The coupling portion 140Z may include a projecting portion. Each fixing jig 100Z and the lid 60 may be coupled by the projecting portion of the coupling portion 140Z being inserted into the recessed portion formed at an arbitrary location in the second surface 62 of the lid 60. The coupling portion 140Z is preferably made of a material softer than the materials constituting the first fixing portion 110Z and the connecting portion 130Z to facilitate coupling to the projecting portion or the recessed portion formed in the lid 60. According to the fixing jigs 100Z, the bulging portion 50Y and the lid 60 are coupled by the coupling portion 140Z, and it is thus possible to reduce a pulling force acting on the bulging portion 50Y in a case where the electrical storage device 10 is moved to an arbitrary place in a state where the fixing jigs 100Z are gripped, for example. Therefore, a part of the outer package film 50 constituting the bulging portion 50Y is unlikely to be damaged. The fixing jigs 100Z also have an effect of suppressing expansion of the outer packaging 40 and an effect of suppressing delamination of the first seal portion 70 and the second seal portion 80 similarly to the fixing jigs 100. In a case where at least parts of the fixing jigs 100Z are joined to an arbitrary surface of the outer packaging 40, an effect of suppressing contraction of the outer packaging 40 is obtained.

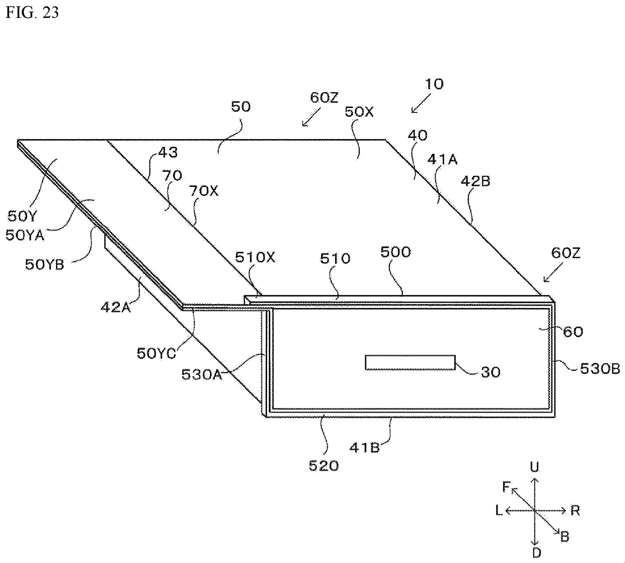

Fig. 23 is a perspective view of the electrical storage device 10 including a fixing jig 500 in yet another modification. The fixing jig 500 has a frame shape surrounding the lid 60. The fixing jig 500 may or may not be joined to the outer packaging 40. The fixing jig 500 includes an upper surface frame 510, a lower surface frame 520, and a pair of side surface frames 530A and 530B.

The upper surface frame 510 is in contact with the first surface 41A of the outer packaging 40. The upper surface frame 510 extends in the LR direction. The length of the upper surface frame 510 in the LR direction is longer than that of the body portion 50X. Therefore, one end part 510X of the upper surface frame 510 in the LR direction straddles the first surface 41A of the outer packaging 40 and the first surface 50YA of the bulging portion 50Y.

The lower surface frame 520 is in contact with the first surface 41B of the outer packaging 40. The lower surface frame 520 extends in the LR direction. The length of the lower surface frame 520 in the LR direction is slightly longer than that of the body portion 50X.

The side surface frame 530A extends in the UD direction. The side surface frame 530A is in contact with the second surface 42A of the outer packaging 40. The side surface frame 530A is connected to one end part of the lower surface frame 520 in the LR direction. The side surface frame 530B extends in the UD direction. The side surface frame 530B is in contact with the second surface 42B of the outer packaging 40. The side surface frame 530B is connected to the other end part of the lower surface frame 520 and the other end part of the upper surface frame 510 in the LR direction.

The fixing jig 500 also has an effect of suppressing expansion of the outer packaging 40 and an effect of suppressing delamination of the first seal portion 70 and the second seal portion 80 similarly to the fixing jig 100. In a case where at least a part of the fixing jig 500 is joined to an arbitrary surface of the outer packaging 40, an effect of suppressing contraction of the outer packaging 40 is obtained. Since the fixing jig 500 has a frame shape surrounding the lid 60, the effect of suppressing delamination of the second seal portion 80 is particularly high. The fixing jig 500 can more suitably suppress expansion of the outer packaging 40 as the lengths of the upper surface frame 510, the lower surface frame 520, and the pair of side surface frames 530A and 530B in the FB direction are longer.

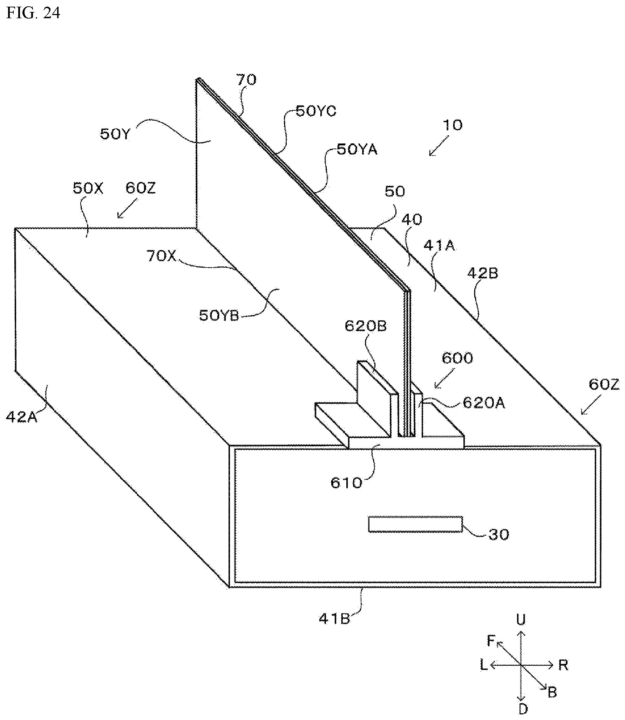

<2-2>
In the above-described embodiments, the position of the root 70X of the first seal portion 70 can be arbitrarily selected. For example, the root 70X of the first seal portion 70 may be located on the first surface 41A of the outer packaging 40 as illustrated in Figs. 24 to 27.

In the example illustrated in Fig. 24, a fixing jig 600 of a modification example is attached to the electrical storage device 10. The fixing jig 600 includes a base portion 610 and a pair of wall portions 620A and 620B.

The base portion 610 has a plate shape and is disposed on the first surface 41A. The base portion 610 may or may not be joined to the first surface 41A.

The pair of wall portions 620A and 620B have a plate shape and stand up from the base portion 610. The wall portion 620A suppresses movement of the bulging portion 50Y toward the first surface 41A on the side of the second surface 42B of the outer packaging 40. The wall portion 620A may or may not be in contact with the first surface S0YA of the bulging portion 50Y. In a case where the wall portion 620A is in contact with the first surface 50YA of the bulging portion 50Y, the wall portion 620A may or may not be joined to the first surface 50YA of the bulging portion 50Y.

The wall portion 620B suppresses movement of the bulging portion 50Y toward the first surface 41A on the side of the second surface 42A of the outer packaging 40. The wall portion 620B may or may not be in contact with the second surface 50YB of the bulging portion 50Y. In a case where the wall portion 620B is in contact with the second surface 50YB of the bulging portion 50Y, the wall portion 620B may or may not be joined to the second surface 50YB of the bulging portion 50Y. Note that in the example illustrated in Fig. 24, one of the wall portion 620A and the wall portion 620B may be omitted. The fixing jig 600 also has an effect of suppressing expansion of the outer packaging 40 and an effect of suppressing delamination of the first seal portion 70 and the second seal portion 80 similarly to the fixing jigs 100. In a case where at least a part of the fixing jig 600 is joined to an arbitrary surface of the outer packaging 40, an effect of suppressing contraction of the outer packaging 40 is obtained. Since the fixing jig 600 sandwiches the first seal portion 70 between the pair of wall portions 620A and 620B, the effect of suppressing delamination of the first seal portion 70 (particularly, the part including the root 70X) is particularly high.

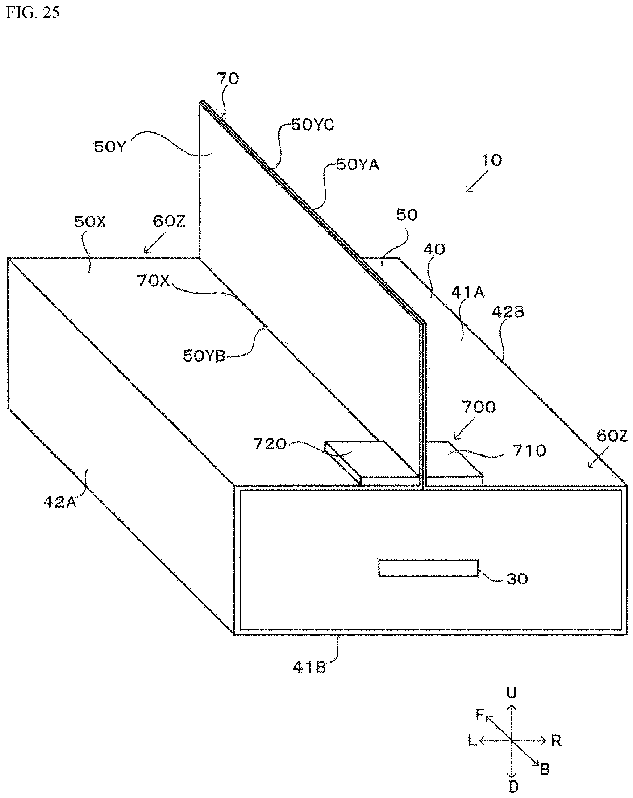

In the example illustrated in Fig. 25, a fixing jig 700 in a modification is attached to the electrical storage device 10. The fixing jig 700 includes a pair of fixing portions 710 and 720. The pair of fixing portions 710 and 720 have plate shapes and are disposed on the first surface 41A. The pair of fixing portions 710 and 720 may or may not be joined to the first surface 41A.

The fixing portion 710 suppresses movement of the bulging portion 50Y toward the first surface 41A on the side of the second surface 42B of the outer packaging 40. The fixing portion 710 may or may not be in contact with the first surface 50Y A of the bulging portion 50Y. In a case where the fixing portion 710 is in contact with the first surface 50YA of the bulging portion 50Y, the fixing portion 710 may or may not be joined to the first surface 50YA of the bulging portion 50Y.

The fixing portion 720 suppresses movement of the bulging portion 50Y toward the first surface 41A on the side of the second surface 42A of the outer packaging 40. The fixing portion 720 may or may not be in contact with the second surface 50YB of the bulging portion 50Y. In a case where the fixing portion 720 is in contact with the second surface 50YB of the bulging portion 50Y, the fixing portion 720 may or may not be joined to the second surface 50YB of the bulging portion 50Y. Note that in the example illustrated in Fig. 25, one of the fixing portion 710 and the fixing portion 720 may be omitted and the fixing portion 710 and the fixing portion 720 may be partially coupled. The fixing jig 700 also has an effect of suppressing expansion of the outer packaging 40 and an effect of suppressing delamination of the first seal portion 70 and the second seal portion 80 similarly to the fixing jigs 100. In a case where at least a part of the fixing jig 700 is joined to an arbitrary surface of the outer packaging 40, an effect of suppressing contraction of the outer packaging 40 is obtained. Since the fixing jig 700 sandwiches the first seal portion 70 between the pair of fixing portions 710 and 720, the effect of suppressing delamination of the first seal portion 70 (particularly, the part including the root 70X) is particularly high.

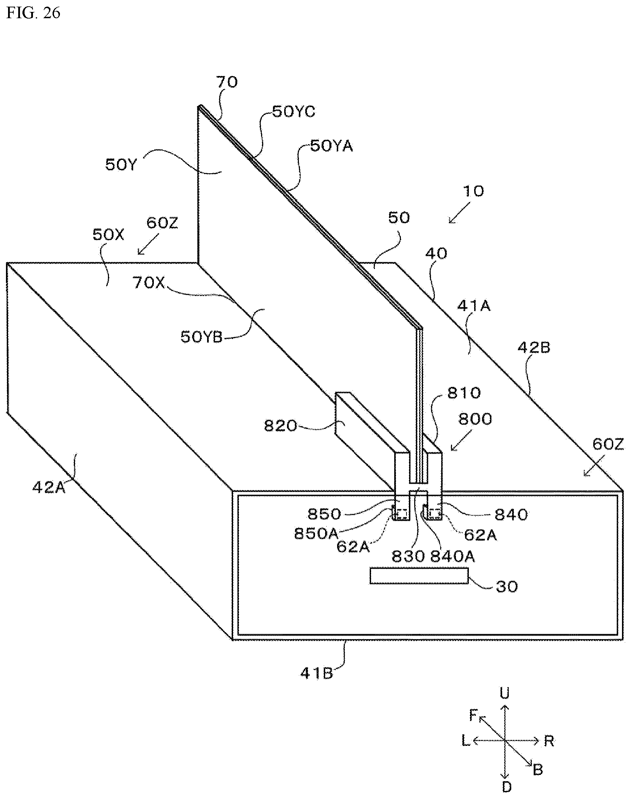

In the example illustrated in Fig. 26, a fixing jig 800 in a modification is attached to the electrical storage device 10. The fixing jig 800 includes a pair of wall portions 810 and 820, a connecting portion 830, and a pair of coupling portions 840 and 850.

The pair of wall portions 810 and 820 have plate shapes and are disposed on the first surface 41A. The pair of wall portions 810 and 820 may or may not be joined to the first surface 41A.

The wall portion 810 suppresses movement of the bulging portion 50Y toward the first surface 41A on the side of the second surface 42B of the outer packaging 40. The wall portion 810 may or may not be in contact with the first surface 50YA of the bulging portion 50Y. In a case where the wall portion 810 is in contact with the first surface 50YA of the bulging portion 50Y, the wall portion 810 may or may not be joined to the first surface 50YA of the bulging portion 50Y.

The wall portion 820 suppresses movement of the bulging portion 50Y toward the first surface 41A on the side of the second surface 42A of the outer packaging 40. The wall portion 820 may or may not be in contact with the second surface 50YB of the bulging portion 50Y. In a case where the wall portion 820 is in contact with the second surface 50YB of the bulging portion 50Y, the wall portion 820 may or may not be joined to the second surface 50YB of the bulging portion 50Y. The connecting portion 830 connects the wall portion 810 and the wall portion 820.

The coupling portion 840 is connected to the wall portion 810 and is coupled to the lid 60. In the example illustrated in Fig. 26, the coupling portion 840 has a hollow box shape including a recessed portion 840A. The fixing jig 800 and the lid 60 are coupled by the projecting portion 62A formed at an arbitrary location in the second surface 62 of the lid 60 being inserted into the recessed portion 840A. The coupling portion 840 may have a projecting portion. The fixing jig 800 and the lid 60 may be coupled by the projecting portion of the coupling portion 840 being inserted into the recessed portion formed at an arbitrary location in the second surface 62 of the lid 60. The coupling portion 840 is preferably made of a material softer than the materials constituting the pair of wall portions 810 and 820 and the connecting portion 830 to facilitate coupling to the projecting portion or the recessed portion formed in the lid 60.

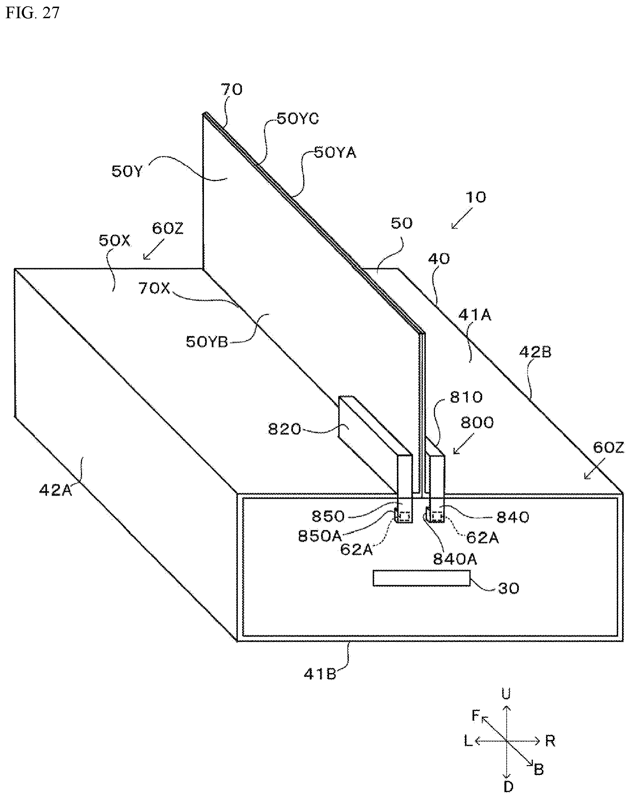

The coupling portion 850 is connected to the wall portion 820 and is coupled to the lid 60. In the example illustrated in Fig. 26, the coupling portion 850 has a hollow box shape including a recessed portion 850A. The fixing jig 800 and the lid 60 are coupled by the projecting portion 62A formed at an arbitrary location in the second surface 62 of the lid 60 being inserted into the recessed portion 850A. The coupling portion 850 may have a projecting portion. The fixing jig 800 and the lid 60 may be coupled by the projecting portion of the coupling portion 850 being inserted into the recessed portion formed at an arbitrary location in the second surface 62 of the lid 60. The coupling portion 850 is preferably made of a material softer than the materials constituting the pair of wall portions 820 and 820 and the connecting portion 830 to facilitate coupling to the projecting portion or the recessed portion formed in the lid 60. Note that in the example illustrated in Fig. 26, the wall portion 810 and the coupling portion 840, or the wall portion 820 and the coupling portion 850 may be omitted. As illustrated in Fig. 27, the connecting portion 830 may be omitted. According to the fixing jig 800, the bulging portion 50Y and the lid 60 are coupled by the coupling portions 840 and 850, and it is thus possible to reduce a pulling force acting on the bulging portion 50Y in a case where the electrical storage device 10 is moved to an arbitrary place in a state where the fixing jig 800 is gripped, for example. Therefore, a part of the outer package film 50 constituting the bulging portion 50Y is unlikely to be damaged. The fixing jig 800 also has an effect of suppressing expansion of the outer packaging 40 and an effect of suppressing delamination of the first seal portion 70 and the second seal portion 80 similarly to the fixing jig 100. In a case where at least a part of the fixing jig 800 is joined to an arbitrary surface of the outer packaging 40, an effect of suppressing contraction of the outer packaging 40 is obtained. Since the fixing jig 800 sandwiches the first seal portion 70 between the pair of wall portions 810 and 820, the effect of suppressing delamination of the first seal portion 70 (particularly, the part including the root 70X) is particularly high.
<2-3>
   In the above-described embodiments, at least one of the coupling portion 220 and the connecting portion 230 of the fixing jig 200 can be omitted. In short, it is only necessary for the fixing jig 200 to include at least the first fixing portion 210. In a case where the fixing jig 200 is formed only of the first fixing portion 210, the first fixing portion 210 is joined to at least parts of the second surface 50YB of the bulging portion 50Y and the second surface 42A of the outer packaging 40 by an adhesive, heat sealing, or the like.
<2-4>
   In the above-described embodiments, the configuration of the first seal portion 70 can be arbitrarily changed. For example, the thick film portion 90 can be omitted from the first seal portion 70. In the electrical storage device 10 of this modification, the thickness HA of the first seal portion 70 may be constant, or the thickness may partially change. In addition, the first seal portion 70 may be folded at the root 70X as a start point.
<2-5>
   In each of the above-described embodiments, the outer package film 50 of the electrical storage device 10 may stick further outward than at least one of the two lids 60 in the FB direction. The electrode assembly 20 is sealed by the part of the outer package film 50 sticking further outward than the lid 60 being closed. The part of the outer package film 50 sticking further than the lid 60 may be folded inward such that outer surfaces of the outer package film 50 are in contact with each other like a gable top container or may be folded toward an arbitrary surface of the outer packaging 40.
<2-6>
   In each of the above-described embodiments, the outer packaging 40 may not include one of the two lids 60. In this modification, the electrode assembly 20 is sealed by the part of the outer package film 50 sticking further outward than the electrode assembly 20 being closed at the part of the outer packaging 40 from which the lid 60 is omitted in the FB direction. The part of the outer package film 50 sticking further outward than the electrode assembly 20 may be folded like a gable top container or a brick-shaped container.
<2-7>
   In the above-described embodiments, the outer contour shape of the outer packaging 40 can be arbitrarily changed. The outer contour shape of the outer packaging 40 may be a cylinder, a prism, or a cube.
<2-8>
   Although the electrode assembly 20 is wrapped by one outer package film 50 in the above-described embodiments, the electrode assembly 20 may be wrapped by two or more outer package films 50.

### Reference Signs List

10 Electrical storage device
10Z Intermediate body
20 Electrode assembly
40 Outer packaging
50 Outer package film
50Y Bulging portion
60 Lid
70 First seal portion
70X Root
100 Fixing jig
100X Fixing jig
100Y Fixing jig
100Z Fixing jig
200 Fixing jig
500 Fixing jig
600 Fixing jig
700 Fixing jig
800 Fixing jig

## Claims

1. An electrical storage device comprising:
an electrode assembly; and
an outer packaging that seals the electrode assembly,
wherein the outer packaging includes
an outer package film that wraps the electrode assembly,
a body portion in which at least the electrode assembly is wrapped by the outer package film,
a bulging portion at which the outer package film bulges outward from the body portion,
a first seal portion, at which mutually facing surfaces of the outer package film are sealed, in the bulging portion, and
a fixing jig that suppresses movement of the bulging portion with respect to the body portion.

2. The electrical storage device according to claim 1, wherein the fixing jig includes a first fixing portion that is disposed to straddle the body portion and the bulging portion.

3. The electrical storage device according to claim 1 or 2, wherein the fixing jig includes a second fixing portion that supports the bulging portion.

4. The electrical storage device according to claim 1, wherein
the fixing jig includes
a first fixing portion that is disposed to straddle the body portion and the bulging portion,
a second fixing portion that supports the bulging portion, and
a connecting portion that connects the first fixing portion and the second fixing portion.

5. The electrical storage device according to claim 1, 2, or 4, wherein the outer packaging further includes a lid that seals the electrode assembly along with the outer package film.

6. The electrical storage device according to claim 5, wherein
the lid includes a projecting portion or a recessed portion, and
the fixing jig is coupled to the projecting portion or the recessed portion.

7. The electrical storage device according to claim 1, wherein
the bulging portion is folded at a position away from a root of the first seal portion as a start point,
a gap is formed between the bulging portion and the body portion, and
the fixing jig is disposed in at least a part of the gap.

8. A fixing jig that is attached to at least an electrical storage device and an intermediate body of the electrical storage device, wherein
the electrical storage device or the intermediate body includes
an electrode assembly,
an outer package film that wraps the electrode assembly,
a body portion in which at least the electrode assembly is wrapped by the outer package film, and
a bulging portion at which the outer package film bulges outward from the body portion, and
the fixing jig is configured to suppress movement of the bulging portion with respect to the body portion.

9. A method for manufacturing an electrical storage device,
the electrical storage device including
an electrode assembly, and
an outer packaging that seals the electrode assembly,
the outer packaging including
an outer package film that wraps the electrode assembly,
a body portion in which at least the electrode assembly is wrapped by the outer package film,
a bulging portion at which the outer package film bulges outward from the body portion, and
a first seal portion, at which mutually facing surfaces of the outer package film are sealed, in the bulging portion,
the method comprising:
a wrapping process of wrapping at least the electrode assembly by the outer package film such that the body portion and the bulging portion are formed; and
a jig disposition process of disposing a fixing jig that suppresses movement of the bulging portion with respect to the body portion, the jig disposition process being performed later than the wrapping process.
